# EUROPÄISCHE PATENTSCHRIFT

(11) **EP 3 093 080 B1**
(45) Veröffentlichungstag und Bekanntmachung des Hinweises auf die Patenterteilung: **14.07.2021**
(21) Anmeldenummer: 16166640.9
(22) Anmeldetag: 22.04.2016
(51) Int. Cl.: B21J 15/02, B21J 15/10, B21J 15/36, B23Q 3/155, B23B 31/103, B21D 37/04

(54) **MATRIZENWECHSLER MIT DARAN ANGEPASSTER WECHSELMATRIZE UND MATRIZENDOM SOWIE VERFAHREN ZUM ENTFERNEN UND EINSETZEN DER WECHSELMATRIZE**
DIE CHANGER WITH REPLACEABLE DIE AND DIE DOME ADAPTED THERETO AND METHOD FOR REMOVAL AND INSERTION OF THE REPLACEABLE DIE
DISPOSITIF DE CHANGEMENT DE MATRICE COMPRENANT UNE MATRICE INTERCHANGEABLE ET DOME DE MATRICE ADAPTÉS ET PROCÉDÉ DESTINÉ AU RETRAIT ET À L'INSERTION DE LA MATRICE INTERCHANGEABLE

(30) Priorität: 11.05.2015 DE 102015107337
(43) Veröffentlichungstag der Anmeldung: 16.11.2016
(73) Patentinhaber: Böllhoff Verbindungstechnik GmbH, 33649 Bielefeld (DE)
(72) Erfinder: Ahlemeyer, Fabian, 33649 Bielefeld (DE); Peters, Peter, 33758 Schloß Holte-Stukenbrock (DE)
(74) Vertreter: HWP Intellectual Property

(56) Entgegenhaltungen:
- EP-A1- 0 216 309
- EP-A1- 2 679 337
- WO-A2-2006/089608
- DE-A1-102012 101 894
- DE-U1-202006 013 082
- DE-U1-202013 011 928
- US-A- 5 361 473
- None

## Beschreibung

### 1. Gebiet der Erfindung

Die vorliegende Erfindung betrifft einen Matrizenwechsler für eine Wechselmatrize eines Fügegeräts, insbesondere eines Setzgeräts, die daran angepasste Wechselmatrize sowie einen an die Wechselmatrize angepassten Matrizendom und ein Verfahren zum Entfernen einer Wechselmatrize eines Fügegeräts sowie ein Verfahren zum Einsetzen einer Wechselmatrize in ein Fügegerät.

### 2. Hintergrund der Erfindung

Bei der Herstellung von Produkten mit Fügeverbindungen ist es mittlerweile erforderlich, dass unterschiedliche Materialien, deren Kombination, unterschiedliche Materialdicken oder unterschiedliche Hilfsfügeteile verarbeitet werden müssen. Dies erfordert jeweils ein angepasstes Fügegerät, wie beispielsweise ein Setzgerät bei der Herstellung von Kraftfahrzeugen. Gemäß einer nicht mehr aktuellen Vorgehensweise wurden Nietsetzgeräte entsprechend den Anforderungen an die herzustellende Fügeverbindung gegeneinander ausgetauscht. Diese unterschiedlichen Nietsetzgeräte nutzten das passende Hilfsfügeteil und die entsprechende Matrize, um die vorliegenden Bauteile miteinander zu verbinden.

Um hier eine erhöhte Flexibilität zu erzielen, wurde bspw. gemäß EP 1 467 836 B1 ein auf einem C-Bügel eines Setzgeräts fest installierter Matrizenwechsler eingesetzt. Dieser Matrizenwechsler besteht aus einer tellerähnlichen drehbaren Anordnung, auf der zwei unterschiedliche Matrizen angeordnet sind. Gemäß DE 10 2014 202 729 A1 sind auch drehbare Matrizenteller mit drei oder vier Matrizen einsetzbar.

Das Herstellen von Fügeverbindungen findet mittlerweile auch in Fertigungsstraßen für die Herstellung von Kraftfahrzeugen Anwendung, in denen unterschiedliche Fahrzeuge gebaut werden. Dies erhöht die Anforderungen an die Flexibilität der Fügegeräte, wie bspw. Setzgeräte. Zudem werden zunehmend Schweißverbindungen durch Stanznietverbindungen ersetzt, wofür ebenfalls die passenden Setzgeräte bereitgestellt werden müssen. Um für das Herstellen der verschiedensten Fügeverbindungen in der Fertigungsstraße den Aufwand zur Neueinrichtung von Setzgeräten zu reduzieren, ist es erforderlich, dass die genutzten Setzgeräte mehr Flexibilität in ihrer Anpassungsmöglichkeit an unterschiedliche Fügeverbindungen aufweisen.

Daher offenbart DE 20 2014 102 908 U1 einen Matrizenhalter für eine Mehrzahl von Wechselmatrizen. Dieser Matrizenhalter arbeitet mit dem Matrizendom zur Aufnahme einer Wechselmatrize eines Setzgeräts zusammen, das mithilfe eines Roboters zum Matrizenhalter bewegt wird. Die Wechselmatrize im Matrizendom des Setzgeräts ist über eine Drehbewegung im Matrizendom verriegelt. Der Matrizenhalter stellt über einen seitlich geschlitzten Matrizenkopf eine formschlüssige Verbindung mit der Wechselmatrize her. Diese formschlüssige Verbindung gewährleistet, dass der Matrizenhalter die Wechselmatrize zumindest über eine Vierteldrehung drehen und dadurch im Matrizendom des Setzgeräts entriegeln kann. Gleichzeitig wird mit dieser Drehung die Wechselmatrize im Matrizenhalter axial verriegelt. Nun werden Matrizenhalter und Matrizendom des Setzgeräts relativ zueinander bewegt, sodass die Wechselmatrize aus dem Matrizendom des Setzgeräts entnommen werden kann. In umgekehrter Reihenfolge erfolgt das Einsetzen einer anderen Wechselmatrize aus dem Matrizenhalter in den Matrizendom des Setzgeräts.

Auch der Matrizenhalter aus DE 20 2013 011 927 U1 übernimmt eine Wechselmatrize aus einem Matrizendom über eine Drehbewegung. Diese Drehbewegung der Wechselmatrize, die über den Matrizenkopf in die Wechselmatrize eingeleitet wird, erfordert spezielle Greif- oder Verbindungsmechanismen, die diese Drehbewegung unterstützen. Zudem ist eine ausreichende Genauigkeit bei der kombinierten Drehbewegung und anschließenden linearen Lösebewegung der Wechselmatrize erforderlich, die einerseits aufwendig in ihrer Konstruktion und zudem in dem späteren Wartungsaufwand ist. Im Hinblick auf die Wartung ist unter anderem die Verschmutzung durch und Beseitigung von Klebstoffrückständen kritisch.

Wie oben bereits erwähnt worden ist, werden die Wechselmatrizen über eine Kombination einer linearen Bewegung und einer Drehbewegung im Matrizendom verriegelt oder über eine Umkehrung dieser Bewegungen aus dem Matrizendom entnommen. Zu diesem Zweck weist die Wechselmatrize in ihrem Matrizenschaft eine Verriegelungsnut auf, in die Stege des Matrizendoms eingreifen können. Diese Stege sind bspw. einander gegenüberliegend angeordnet und fest im Matrizendom installiert. Um den Matrizenschaft zwischen diesen Stegen einsetzen zu können, ist dieser in einer bestimmten Winkelorientierung verjüngt ausgebildet. Nach dem Verdrehen der Wechselmatrize ist der verjüngte Schaftbereich senkrecht zu den Stegen ausgerichtet, sodass der Matrizenschaft im Matrizendom fixiert ist. Sowohl die Einsetztiefe des Matrizenschafts wie auch der Drehwinkel der Wechselmatrize müssen genau an die Wechselmatrize angepasst sein, um auch bei wiederholtem Einsetzen und Entnehmen einer Wechselmatrize eine verlässliche Verbindung zwischen dem Matrizendom und der Wechselmatrize herstellen zu können. Des Weiteren sind bajonettähnliche Verbindungen zwischen Wechselmatrize und Matrizendom offenbart. Diese sind nicht nur aufgrund des komplexen Bewegungsablaufs zum Verriegeln und Entriegeln der Matrize im Matrizendom anfällig, sondern ebenfalls aufgrund einer Verschmutzung, die sich in der Bajonettverbindung ablagern kann.

Um die verschiedenen im Matrizenhalter gespeicherten Wechselmatrizen unterscheiden zu können, beschreiben DE 20 2013 011 928 U1 einen am Matrizenkopf oder am Matrizenschaft angebrachten Identifikationscode. Dieser Identifikationscode ist im Speziellen an der radialen Außenseite des Matrizenkopfs oder des Matrizenschafts angeordnet. Obwohl diese Identifikationscodes, wie ein Strichcode, ein Nummerncode oder ein zweidimensionaler Code durch eine Kamera, einen Scanner oder einen anderen passenden Sensor erfassbar sind, sind diese Identifikationscodes anfällig gegen Beschädigung. Denn bei der Übernahme der Wechselmatrize durch den Matrizenhalter findet eine Drehbewegung statt, während der der Matrizenhalter an der radialen Außenseite des Matrizenkopfs angreift. Während dieser Bewegung werden die am Matrizenkopf angebrachten Identifikationscodes beschädigt. Die am Matrizenschaft angeordneten Identifikationscodes sind durch eine reibschlüssige Verbindung des Matrizenschafts zur radialen Innenseite des Matrizendoms belastet. Dieser Reibschluss führt ebenfalls zu einer Beschädigung der Identifikationscodes, sodass die Identifikationscodes nach mehreren Wechseln der Wechselmatrize nicht mehr leserlich bzw. identifizierbar sind.

US 5,361,473 A offenbart eine Wechselmatrize und einen Matrizendom eines Fügewerkzeugs, insbesondere eines Setzgeräts, und bildet die Basis für den Oberbegriff der Patentansprüche 1, 5 und 9. EP 0 216 309 A1 offenbart einen Matrizenwechsler und bildet die Basis für den Oberbegriff des Patentanspruchs 10.

Es ist daher die Aufgabe vorliegender Erfindung, einen Matrizenwechsler mit daran angepasster Wechselmatrize und angepasstem Matrizendom bereitzustellen, der bei gleicher Flexibilität eine geringere Störanfälligkeit und somit eine höhere Lebensdauer im Vergleich zum Stand der Technik aufweist. Das gleiche gilt auch für die verwendeten Wechselmatrizen, sodass diese für eine höhere Zahl an Wechselzyklen einsetzbar sind, ohne dass eine Beschädigung im Fixiermechanismus und/oder in der Identifikation der Wechselmatrize erfolgt. Zudem ist es Aufgabe vorliegender Erfindung, ein vereinfachtes Verfahren zum Entfernen einer Wechselmatrize aus einem Matrizendom eines Fügegeräts sowie ein vereinfachtes Verfahren zum Einsetzen einer Wechselmatrize in einen Matrizendom eines Fügegeräts bereitzustellen.

### 3. Zusammenfassung vorliegender Erfindung

Die obigen Aufgaben werden durch eine Wechselmatrize gemäß dem unabhängigen Patentanspruch 1, einen Matrizendom gemäß den unabhängigen Patentansprüchen 5 und 9, einen Matrizenwechsler für eine Wechselmatrize eines Fügegeräts, insbesondere eines Setzgeräts, gemäß dem unabhängigen Patentanspruch 10, durch ein Verfahren zum Entfernen einer Wechselmatrize eines Fügegeräts gemäß dem unabhängigen Patentanspruch 14 und durch ein Verfahren zum Einsetzen einer Wechselmatrize eines Fügegeräts gemäß dem unabhängigen Patentanspruch 17 gelöst. Vorteilhafte Ausgestaltungen und Weiterentwicklungen vorliegender Erfindung ergeben sich aus der nachfolgenden Beschreibung, den begleitenden Zeichnungen sowie den anhängenden Patentansprüchen.

Vorliegende Erfindung offenbart eine Wechselmatrize eines Fügewerkzeugs, insbesondere eines Setzgeräts, die einen Matrizenkopf mit einer Oberseite und einer Unterseite aufweist sowie einen Matrizenschaft, der sich senkrecht von der Unterseite des Matrizenkopfs erstreckt und angepasst ist, um drehungsfrei in einem Matrizendom aufnehmbar und verriegelbar zu sein. Der Matrizenschaft der Wechselmatrize umfasst die folgenden Merkmale: mindestens einen ersten Radialsteg, der zumindest einen einseitigen axialen Hinterschnitt bildet, über den der Matrizenschaft allein über eine geradlinige Einsetzbewegung im Matrizendom verriegelbar ist, mindestens einen zweiten Radialsteg, dessen radiale Länge an einen Durchmesser des Matrizendoms anpassbar ist, um eine laterale Führung des Matrizenschafts im Matrizendom zu gewährleisten, und der zwischen dem Matrizenkopf und dem ersten Radialsteg angeordnet ist, und eine Auswurffläche, mit der die Wechselmatrize aus dem Matrizendom ausschiebbar und die benachbart zum freien Ende des Matrizenschafts gegenüber dem Matrizenkopf angeordnet ist.

Die erfindungsgemäße Wechselmatrize ist derart konfiguriert, dass sie allein durch ein drehungsfreies axiales Einsetzen des Matrizenschafts in einen Matrizendom verriegelbar und somit im Fügegerät anordenbar ist. Dies wird dadurch realisiert, dass der Matrizenschaft einen ersten Radialsteg aufweist, an dem einseitig oder beidseitig ein Rastmechanismus des Matrizendoms verriegelbar ist. Auf Grund der freistehenden Position des ersten Radialstegs bildet dieser mit einer dem Matrizenkopf zugewandten Seite und mit einer dem Matrizenkopf abgewandten Seite jeweils einen axialen Hinterschnitt, der ein Bewegen der Wechselmatrize in axialer Richtung nach Verriegelung mit dem Matrizendom verhindert. Dies gewährleistet einen sicheren Sitz im Matrizendom. Gleichzeitig wird der Matrizenschaft über den zweiten Radialsteg seitlich geführt, so dass der Matrizenschaft und somit die Wechselmatrize passgenau im Matrizendom aufnehmbar und haltbar ist. Weiterhin bevorzugt ist die Wechselmatrize über die Auswurffläche in axialer Richtung entgegen der Einsetzrichtung und vorzugsweise drehungsfrei aus dem Matrizendom auswerfbar. Dazu greift ein Auswerfdorn an der Auswurffläche an. Die Auswurffläche ist gemäß einer bevorzugten Ausführungsform am Ende der Wechselmatrize gegenüber dem Matrizenkopf angeordnet und bildet einen Angriffspunkt für einen axial verschiebbaren Auswerfdorn. Gemäß einer weiteren bevorzugten Ausführungsform vorliegender Erfindung bildet der erste Radialsteg zumindest teilweise mit einer dem Matrizenkopf abgewandten axialen Seitenfläche die Auswurffläche. Vorzugsweise wird sie in Kombination mit einem sich axial über den ersten Radialsteg hinaus erstreckenden Matrizenschaft eingesetzt. Dieser greift zum Auswerfen der Wechselmatrize bevorzugt in eine mittige Öffnung des Auswerfdorns ein.

Vorzugsweise weist die Wechselmatrize eine Matrizenkodierung auf, die auf oder an dem Matrizenschaft angeordnet und optisch auswertbar ist. Zum Schutz der Matrizenkodierung ist gemäß einer bevorzugten Ausführungsform vorliegender Erfindung ein radialer Verjüngungsabschnitt mit einer geringeren radialen Ausdehnung als der zweite Radialsteg am Matrizenschaft vorgesehen. Durch Anordnung der Matrizenkodierung auf dieser radialen Verjüngung ist die Matrizenkodierung geschützt angeordnet, da weder durch den Matrizenhalter noch durch den Matrizendom die Matrizenkodierung angreifbar ist.

Gemäß einer weiteren bevorzugten Ausführungsform vorliegender Erfindung ist ein dritter Radialsteg als Matrizenkodierung vorgesehen. Der dritte Radialsteg weist eine einstellbare axiale Länge und mindestens einen radialen Einstich auf, der in radialer Richtung verläuft. Die Kombination aus Radialsteg und Einstich erscheint in einer Seitenansicht ähnlich einem Strichcode und ist als Matrizenkodierung nutzbar. Ein auf diese Weise erzeugtes individuelles Kennzeichen der Wechselmatrize lässt sich vorzugsweise optisch durch eine Kamera oder einen Scanner erfassen. Zudem ist diese Art der Matrizenkodierung nicht anfällig für Verschmutzung. Gemäß unterschiedlicher bevorzugter Ausführungsformen vorliegender Erfindung ist der dritte Radialsteg an den Durchmesser der Durchgangsöffnung angepasst, um für eine radiale Abstützung des Matrizenschafts zu sorgen. Gemäß einer anderen Ausführungsform ist der dritte Radialsteg kleiner im Außendurchmesser als der Innendurchmesser der Durchgangsöffnung, um die Matrizenkodierung nicht zu beschädigen.

Weiterhin bevorzugt weist der Matrizenkopf einen radial verjüngten Axialabschnitt auf, der den zweiten Radialsteg bildet, der sich in Richtung Matrizenschaft erstreckt und der in einer radialen Ausdehnung an den Durchmesser des Matrizendoms anpassbar ist. Gemäß dieser bevorzugten konstruktiven Ausgestaltung des Matrizenschafts ist dieser an zumindest zwei Stellen lateral in der Öffnung des Matrizendoms geführt.

Vorliegende Erfindung umfasst zudem einen Matrizendom eines Fügegeräts, insbesondere eines Setzgeräts, in dem ein Matrizenschaft einer Matrize, insbesondere einer Wechselmatrize gemäß einer der oben beschriebenen Ausführungsformen, aufnehmbar und drehungsfrei verriegelbar ist. Der Matrizendom weist die folgenden Merkmale auf: eine hohlzylindrische Durchgangsöffnung zur Aufnahme und Führung des Matrizenschafts, die einen axialen Führungsabschnitt und einen dazu benachbarten axialen Verriegelungsabschnitt umfasst, wobei im Verriegelungsabschnitt eine formschlüssig wirkende und federvorgespannte Verriegelungsanordnung vorgesehen und derart konfiguriert ist, dass ein Matrizenschaft über ein drehungsfreies Einsetzen des Matrizenschafts in einer Einsetzrichtung in den Verriegelungsabschnitt darin automatisch verriegelbar ist und über ein Einstecken eines Auswerfdorns in die Durchgangsöffnung in einer der Einsetzrichtung entgegengesetzten Auswerfrichtung aus der Verriegelungsanordnung automatisch lösbar und aus dem Matrizendom entfernbar ist.

Die hohlzylindrische Durchgangsöffnung des Matrizendoms dient gleichzeitig der positionsgenauen Anordnung der Wechselmatrize wie auch dem Entfernen der Wechselmatrize durch Einführen eines Auswerfdorns von der der Wechselmatrize abgewandten Öffnung der Durchgangsöffnung. Mit Hilfe dieser Konstruktion sowie der im Matrizendom vorgesehenen Verriegelungsanordnung ist der Matrizendom derart an die Wechselmatrize angepasst, dass allein durch eine axiale Bewegung des Matrizenschafts innerhalb des Matrizendoms und des Auswerfdorns innerhalb des Matrizendoms ein Anordnen, Verriegeln und Entfernen der Wechselmatrize stattfinden kann. Dies vermeidet die Notwendigkeit von Drehbewegungen, die auf die Wechselmatrize zum Verriegeln oder Entriegeln und Entfernen übertragen werden müssen. Zudem wird der zum Einsetzen und Entfernen der Wechselmatrize aus dem Matrizendom erforderliche Bewegungsablauf vereinfacht und seine Dauer verkürzt. Des Weiteren ist die hier eingesetzte Konstruktion einfach aufgebaut und erfordert einen geringen Wartungsaufwand im Vergleich zu drehenden Verriegelungsanordnungen aus dem Stand der Technik.

Der Verriegelungsabschnitt des erfindungsgemäßen Matrizendoms weist eine Mehrzahl von Halteschalen auf, die jeweils an einer radialen Außenseite einen Kippsteg umfasst, so dass eine Innenseite der Halteschale um den Kippsteg verschwenkbar ist.

Die verwendete mindestens eine oder Mehrzahl von Halteschalen im Verriegelungsabschnitt des Matrizendoms ist in ihrer Formgebung derart konfiguriert, dass eine bevorzugte axiale Auflaufschrägen in Kombination mit dem genannten Kippsteg eine Auslenkung der jeweiligen Halteschale radial auswärts bewirkt. Wird daher vorzugsweise der Matrizenschaft in die Durchgangsöffnung des Matrizendoms eingesetzt, dann unterstützt die axiale Auflaufschräge an einer radialen Innenseite der Halteschale/Halteschalen das Einlaufen des Matrizenschafts in die mindestens eine Halteschale. Gleichzeitig wird die mindestens eine Halteschalen vorzugsweise durch den Auswerfdorn radial auswärts gedrückt. Danach verriegelt sich vorzugsweise die Mehrzahl der Halteschalen oder die mindestens eine Halteschale automatisch an dem ersten Radialsteg des Matrizenschafts. Erfindungsgemäß bevorzugt wird die genannte Auflaufschräge an den Halteschalen oder am Ende des Matrizenschafts vorgesehen. Bewegt sich der Auswerfdorn durch die Durchgangsöffnung entgegen der Einsetzrichtung der Wechselmatrize, so ist es ebenfalls bevorzugt, dass auf Grund einer Auflaufschräge die Halteschalen automatisch durch den Auswerfdorn geöffnet und dadurch die Wechselmatrize aus der Durchgangsöffnung des Matrizendoms entfernbar ist. Auch in diesem Zusammenhang ist es erfindungsgemäß bevorzugt, die Auflaufschräge an einem Führungsabschnitt des Auswerfdorns, an den Halteschalen oder kombiniert an beiden vorzusehen.

Zur bevorzugten Unterstützung der Verriegelung und Entriegelung der Wechselmatrize im Matrizendom sind die Halteschalen vorzugsweise axial beabstandet zum Kippsteg in eine Ausgangsposition federvorgespannt, so dass die Halteschalen nach einem Verschwenken radial auswärts automatisch in die Ausgangsposition zurückschwenkbar sind. Gemäß einer weiteren bevorzugten Ausführungsform des erfindungsgemäßen Matrizendoms weist der Verriegelungsabschnitt in der Durchgangsöffnung einen größeren Durchmesser als der Führungsabschnitt auf und die Halteschalen sind formschlüssig mit Hilfe eines Einsatzelements im Verriegelungsabschnitt angeordnet. Weiterhin bevorzugt definiert die Mehrzahl von Halteschalen, vorzugsweise zwei Halteschalen, eine zumindest zweistufige Durchgangsöffnung im Matrizendom zwischen den Halteschalen, die benachbart zum Kippsteg einen größeren Durchmesser als entfernt vom Kippsteg aufweist und die entfernt vom Kippsteg eine radial einwärts ragende Raststruktur, insbesondere einen Raststeg oder eine Rastnut, umfasst.

Vorzugsweise sind die Halteschalen in ihrer Konfiguration an das Verriegeln des Matrizenschafts sowie an das Entriegeln des Matrizenschafts durch den Auswerfdorn angepasst. Die Verriegelung des Matrizenschafts wird durch einen radial einwärts ragenden Raststeg oder die genannte Rastnut realisiert, die bei Verriegelung des Matrizenschafts am ersten Radialsteg des Matrizenschafts angreift. Je nach Konfiguration und/oder Belastung der Wechselmatrize ist es bevorzugt, dass durch Anliegen der radial einwärts ragenden Raststruktur der Halteschale ein einseitiger oder ein beidseitiger axialer Hinterschnitt des ersten Radialstegs genutzt wird.

Die bevorzugte zumindest zweistufige Durchgangsöffnung zwischen den bzw. eingeschlossen durch die Halteschalen ist in ihrer Konfiguration an die bevorzugte Form des Auswerfdorns angepasst. Dieser umfasst ebenfalls zumindest eine zweistufige Ausgestaltung, in der vorzugsweise das Führungsende des Auswerfdorns einen größeren Durchmesser aufweist als ein sich an das Auswerfende anschließender Abschnitt des Auswerfdorns. Diese unterschiedlichen Konfigurationen der Durchmesser in der Durchgangsöffnung der Mehrzahl von Halteschalen sowie in der Konfiguration des Auswerfdorns gewährleisten das axiale Auswerfen der Wechselmatrize aus dem Matrizendom, ohne dass dabei eine Drehung der Wechselmatrize erfolgen muss.

Vorliegende Erfindung umfasst zudem einen Matrizendom eines Fügegeräts, insbesondere eines Setzgeräts, in dem ein Matrizenschaft einer Matrize aufnehmbar und drehungsfrei verriegelbar ist. Der Matrizendom weist die folgenden Merkmale auf: eine hohlzylindrische Durchgangsöffnung zur Aufnahme und Führung des Matrizenschafts, die einen axialen Führungsabschnitt und einen dazu benachbarten axialen Verriegelungsabschnitt umfasst, wobei im Verriegelungsabschnitt eine formschlüssig wirkende Verriegelungsanordnung mit einem drehbaren Verriegelungselement vorgesehen ist, so dass ein Matrizenschaft über ein drehungsfreies Einsetzen des Matrizenschafts in einer Einsetzrichtung in den Verriegelungsabschnitt und durch Drehen des Verriegelungselements darin verriegelbar und darin entriegelbar ist und über ein Einstecken eines Auswerfdorns in die Durchgangsöffnung in einer der Einsetzrichtung entgegengesetzten Auswerfrichtung aus der Verriegelungsanordnung und dem Matrizendom entfernbar ist.

Vorliegende Erfindung umfasst eine alternative Konfiguration eines Matrizendoms eines Fügegeräts. In diesem Matrizendom ist ebenfalls die Wechselmatrize drehungsfrei einsetzbar und darin verriegelbar. Um die Verriegelung des Matrizenschafts in der Durchgangsöffnung des Matrizendoms vorzusehen, ist im Verriegelungsabschnitt ein Verriegelungselement angeordnet. Bei Drehung des Verriegelungselements um eine Längsachse des Verriegelungselements ist die Durchgangsöffnung des Matrizendoms gezielt blockierbar oder freigebbar. Diese Funktionalität wird dadurch realisiert, dass das Verriegelungselement, welches stiftartig ausgebildet ist, eine radiale asymmetrische Verjüngung aufweist. Da das stiftartige Verriegelungselement teilweise die Durchgangsöffnung des Matrizendoms durchläuft, realisiert ein Drehen des Verriegelungselements um die Längsachse eine Blockade oder eine Freigabe der Durchgangsöffnung des Matrizendoms.

Vorliegende Erfindung umfasst zudem einen Matrizenwechsler für eine Wechselmatrize eines Fügegeräts, insbesondere eines Setzgeräts, die in einem Matrizendom des Fügegeräts anordenbar ist, der eine Durchgangsöffnung aufweist, wobei der Matrizenwechsler die folgenden Merkmale umfasst: einen Matrizenhalter mit mindestens einer Halteöffnung, die an die Wechselmatrize angepasst ist, derart, dass ein Matrizenschaft in der Halteöffnung aufnehmbar und ein Matrizenkopf an einem Rand der Halteöffnung abstützbar ist, wobei die Halteöffnung eine radiale Freimachung zum radialen Einsetzen des Matrizenschafts in die Halteöffnung aufweist, und einen axial verschiebbar angeordneten Auswerfdorn, der an den Matrizendom derart angepasst ist, dass der Auswerfdorn vollständig durch die Durchgangsöffnung des Matrizendoms bewegbar ist, um eine Wechselmatrize aus dem Matrizendom auszuwerfen.

Der bereits oben beschriebene Matrizendom sowie die Wechselmatrize werden in Kombination mit einem Auswerfdorn und dem Matrizenhalter eingesetzt. Der Matrizenhalter weist eine Mehrzahl an Halteöffnungen für die in den Matrizendom einzusetzenden oder aus dem Matrizendom zu entfernenden Wechselmatrizen auf. Vorzugsweise sind die Halteöffnungen des Matrizenhalters und der Schaft der Wechselmatrize relativ zueinander bewegbar, so dass der Schaft der Wechselmatrize in die Halteöffnung des Matrizenhalters einsetzbar und in dieser Position die Wechselmatrize in die Halteöffnung absenkbar ist.

Gemäß einer bevorzugten Ausführungsform des erfindungsgemäßen Matrizenwechslers umfasst der Matrizenhalter eine drehbar angeordnete Scheibe mit einer Mehrzahl von Halteöffnungen, deren Halteöffnungen gezielt benachbart zum Matrizendom bewegbar sind. Auf Grund der Bewegung des Auswerfdorns wird die Wechselmatrize in eine Position oberhalb des Matrizendoms angehoben, so dass sie in seitlicher Ausrichtung mit der radialen Freimachung der Halteöffnung des Matrizenhalters angeordnet ist. Die relative Bewegung zwischen Halteöffnung und Wechselmatrize ermöglicht dann das Anordnen der Wechselmatrize in der Halteöffnung des Matrizenhalters.

Weiterhin bevorzugt umfasst der Matrizenwechsler einen koaxial oder parallel zum Auswerfdorn axial bewegbar angeordneten Fixierdorn oder eine entsprechende Fixiervorrichtung, der/die angepasst ist, um an einer Oberseite der Wechselmatrize anzugreifen und sich angepasst an den Auswerfdorn zu bewegen. Um die Position der Wechselmatrize zu gewährleisten und ein unkontrolliertes Auswerfen der Wechselmatrize aus dem Matrizendom auf Grund der Bewegung des Auswerfdorns zu vermeiden, fixiert ein Fixierdorn oder eine Fixiervorrichtung die Wechselmatrize an der Oberseite der Wechselmatrize. Mit dieser Fixierung drückt der Fixierdorn bzw. die Fixiervorrichtung die Wechselmatrize gegen den Auswerfdorn, ohne dabei die Bewegung des Auswerfdorns einzuschränken oder zu blockieren. Erfindungsgemäß bevorzugt sind die Bewegungen des Auswerfdorns und des Fixierdorns bzw. der Fixiervorrichtung aufeinander abgestimmt, so dass sie sich vorzugsweise synchron zueinander bewegen. Durch die Nutzung des Fixierdorns wird erreicht, dass die Wechselmatrize bei ihrer Bewegung durch den Auswerfdorn immer eine definierte Position besitzt.

Vorliegende Erfindung umfasst zudem ein System zum Wechseln einer Wechselmatrize an einem Fügegerät, insbesondere ein Setzgerät, das ein Fügegerät mit einem Matrizendom gemäß den oben beschriebenen Ausführungsformen und einen Matrizenwechsler gemäß den oben beschriebenen Ausführungsformen umfasst, die vorzugsweise angepasst sind, um eine Wechselmatrize gemäß den oben beschriebenen Ausführungsformen aus dem Matrizendom zu entfernen oder in diesen einzusetzen.

Des Weiteren umfasst die vorliegende Erfindung ein Verfahren zum Entfernen einer Wechselmatrize eines Fügegeräts, die in einem Matrizendom mit Durchgangsöffnung befestigt ist. Das Verfahren weist die folgende Schritte auf: Anordnen des Matrizendoms, insbesondere ein Matrizendom gemäß einer der oben beschriebenen Ausführungsformen, oberhalb eines Auswerfdorns, Bewegen des Auswerfdorns drehungsfrei durch den Matrizendom, wobei der Auswerfdorn die Wechselmatrize drehungsfrei aus einem Verriegelungsabschnitt des Matrizendoms löst, Bewegen der Wechselmatrize mit dem Auswerfdorn über den Matrizendom hinaus in seitliche Ausrichtung mit einer Halteöffnung eines Matrizenhalters eines Matrizenwechslers, insbesondere ein Matrizenwechsler gemäß einer der oben beschriebenen Ausführungsformen, relatives Bewegen von Matrizenhalter und Wechselmatrize zueinander, so dass die Wechselmatrize in der Halteöffnung des Matrizenhalters drehungsfrei angeordnet ist, und drehungsfreies Einsetzen der Wechselmatrize in die Halteöffnung durch axiales Bewegen des Auswerfdorns. Gemäß einer weiteren erfindungsgemäß bevorzugten Ausgestaltung des vorliegenden Verfahrens sind die folgenden Schritte vorgesehen: Bewegen eines Fixierdorns oder einer Fixiervorrichtung in Anlage mit einer Oberseite eines Matrizenkopfs der Wechselmatrize, vorzugsweise bevor der Auswerfdorn die Wechselmatrize bewegt, und Halten der Wechselmatrize zwischen Auswerfdorn und Fixierdorn bzw. Fixiervorrichtung beim Bewegen der Wechselmatrize zur Halteöffnung des Matrizenhalters. Zudem wird während des erfindungsgemäßen Verfahrens zum Entfernen der Wechselmatrize bevorzugt der Auswerfdorn in eine Durchgangsöffnung gebildet aus mehreren Halteschalen im Verriegelungsabschnitt des Matrizendoms bewegt und der Auswerfdorn entriegelt dort die Wechselmatrize, insbesondere den Matrizenschaft, über ein Verschwenken der Halteschalen durch den Auswerfdorn.

Vorliegende Erfindung umfasst zudem ein Verfahren zum Einsetzen einer Wechselmatrize eines Fügegeräts, insbesondere ein Setzgerät, das einen Matrizendom mit Durchgangsöffnung aufweist, wobei das Verfahren die folgenden Schritte umfasst: Anordnen einer Halteöffnung eines Matrizenhalters, insbesondere ein Matrizenhalter eines Matrizenwechslers gemäß einer der oben beschriebenen Ausführungsformen, die eine Wechselmatrize enthält, oberhalb eines Auswerfdorns, der durch die Durchgangsöffnung des Matrizendoms bewegt worden ist, bevorzugt drehungsfreies Lösen der Wechselmatrize aus der Halteöffnung durch eine Bewegung des Auswerfdorns, Entfernen der Halteöffnung von der gelösten Wechselmatrize und Bewegen des Auswerfdorns durch die Durchgangsöffnung des Matrizendoms, wobei sich die Wechselmatrize in einem Verriegelungsabschnitt des Matrizendoms, vorzugsweise drehungsfrei, verriegelt. Das Verfahren zum Einsetzen der Wechselmatrize in das Fügegerät erfolgt erfindungsgemäß bevorzugt gemäß einer kinematischen Umkehr des Verfahrens zum Entfernen der Wechselmatrize aus dem Matrizendom des Fügegeräts ab. Daher ist es ebenfalls bevorzugt, die Wechselmatrize mit Hilfe eines Fixierdorns oder einer Fixiervorrichtung in den Verriegelungsabschnitt des Matrizendoms mit mindestens einer Halteschale zu drücken.

### 4. Kurze Beschreibung der begleitenden Zeichnungen

Die bevorzugten Ausführungsformen vorliegender Erfindung werden unter Bezugnahme auf die begleitenden Zeichnungen näher erläutert. Es zeigen:
- Figur 1: eine perspektivische Überblicksansicht eines bevorzugten Systems bestehend aus Fügegerät mit Matrizendom, Wechselmatrize und einem Matrizenwechsler,
- Figur 2a: eine vergrößerte Darstellung einer bevorzugten Ausführungsform des Matri-zenwechslers mit einem Fixierdorn,
- Figur 2b: eine vergrößerte Darstellung einer bevorzugten Ausführungsform des Matri-zenwechslers mit einer Fixiervorrichtung,
- Figur 3a: eine vergrößerte Darstellung einer ersten bevorzugten Ausführungsform eines erfindungsgemäßen Matrizendoms mit zwei Halteschalen und darin angeordne-ter Wechselmatrize,
- Figur 3b: eine vergrößerte Darstellung eines nicht erfindungsgemäßen Matrizendoms mit einer Halteschale und darin angeordneter Wechselmatrize,
- Figur 4: eine bevorzugte alternative Ausführungsform eines Matrizendoms mit Wech-selmatrize in perspektivischer Darstellung,
- Figur 5: eine seitliche Schnittdarstellung des Matrizendoms aus Figur 4,
- Figur 6: eine radiale Schnittansicht des Matrizendoms gemäß Figur 4,
- Figur 7: eine vergrößerte Darstellung des Matrizendoms gemäß Figur 3a, bei dem ein bevorzugter Auswerfdorn in den Matrizendom einfährt,
- Figur 8: eine weitere Sequenz eines bevorzugten Auswerfvorgangs der Wechselmatrize aus dem Matrizendom, bei der der Auswerfdorn weiter in die Durchgangsöff-nung des Matrizendoms hineinbewegt wird anschließend an die Sequenz aus Figur 7,
- Figur 9: eine seitliche Schnittdarstellung einer bevorzugten Anordnung des Matrizen-doms mit Auswerfdorn benachbart zum Matrizenwechsler bevor der Auswerf-dorn eine Wechselmatrize aus einem Matrizenhalter entnimmt,
- Figur 10: die Anordnung gemäß Figur 9, wobei der Auswerfdorn an der Wechselmatrize angreift, und die Wechselmatrize aus dem Matrizenhalter heraushebt,
- Figur 11: die bevorzugte Anordnung gemäß Figur 9, wobei der Auswerfdorn die Wech-selmatrize vollständig in den Matrizendom abgesenkt hat,
- Figur 12: die bevorzugte Anordnung gemäß Figur 11, wobei die Wechselmatrize im Matrizendom verriegelt worden ist und der Auswerfdorn aus dem Matrizendom entfernt wurde,
- Figur 13: ein Flussdiagramm einer bevorzugten Ausführungsform eines Verfahrens zum Entfernen einer bevorzugten Wechselmatrize eines Fügegeräts aus einem be-vorzugten Matrizendom und
- Figur 14: ein Flussdiagramm einer bevorzugten Ausführungsform eines Verfahrens zum Einsetzen einer Wechselmatrize eines Fügegeräts in einen bevorzugten Matri-zendom.

### 5. Detaillierte Beschreibung der bevorzugten Ausführungsformen

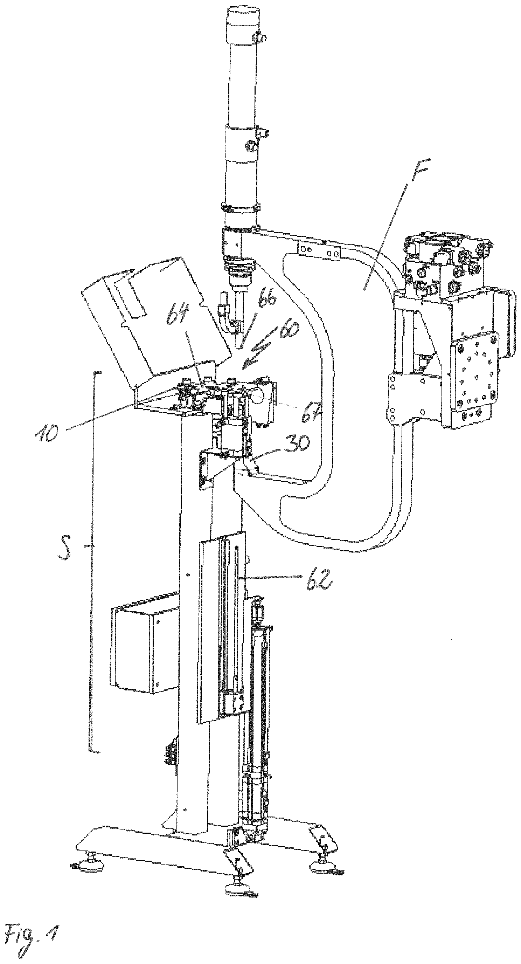

Figur 1 zeigt eine perspektivische Überblicksdarstellung eines Fügegeräts F in Kombination mit einem Matrizenwechsler 60. Das Fügegerät F ist durch einen C-Rahmen eines Setzgeräts angedeutet. Als Fügegerät sind alle Geräte denkbar, die eine Matrize verwenden, egal ob der Fügevorgang mit oder ohne Hilfsfügeteil durchgeführt wird. Derartige Fügegeräte sind beispielsweise ein Setzgerät für Stanzniete, ein Fügegerät zum Clinchen oder dergleichen. Im Folgenden wird zur Erläuterung auf ein Setzgerät für Stanzniete in Kombination mit einem C-Rahmen Bezug genommen.

Das Setzgerät ist an einem offenen Ende des C-Rahmens angeordnet, während eine Wechselmatrize 10 in einem Matrizendom 30 am anderen offenen Ende des C-Rahmens vorgesehen ist. Die Wechselmatrize 10 ist im Matrizendom 30 austauschbar fixiert. Dieser Austausch erfolgt mit Hilfe eines Matrizenwechslers 60, der bevorzugt einen Auswerfdorn 62 umfasst.

Der Auswerfdorn 62 ist linear, vorzugsweise drehungsfrei, durch eine hohlzylindrische Durchgangsöffnung 32 des Matrizendoms 30 bewegbar (SII), nachdem der Matrizendom 30 über dem Auswerfdorn 62 positioniert worden ist (SI). Dabei entfernt der Auswerfdorn 62 die Wechselmatrize 10 aus dem Matrizendom 30 und positioniert sie angrenzend an einen Matrizenhalter 64 (SIII).

Der Matrizenhalter 64 enthält mindestens eine Halteöffnung 68, in der die Wechselmatrize 10 anordenbar ist. Die Halteöffnung 68 und die Wechselmatrize 10 werden relativ zueinander bewegt, so dass die Wechselmatrize 10 innerhalb der Halteöffnung 68 angeordnet ist. Zu diesem Zweck weist die Halteöffnung 68 eine radiale Freimachung 69 auf, durch die der Schaft 14 der Wechselmatrize 10 in die Halteöffnung 68 einführbar ist (SIV). Über eine Bewegung des Auswerfdorns 62 in Richtung Matrizendom 30 wird bevorzugt die Wechselmatrize 10 in der Halteöffnung 68 abgelegt (SV).

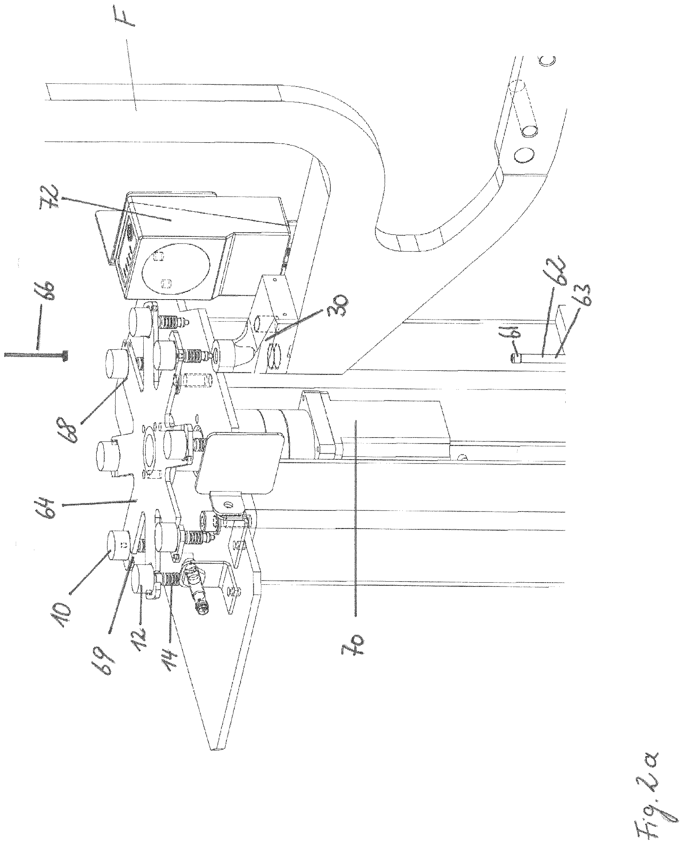

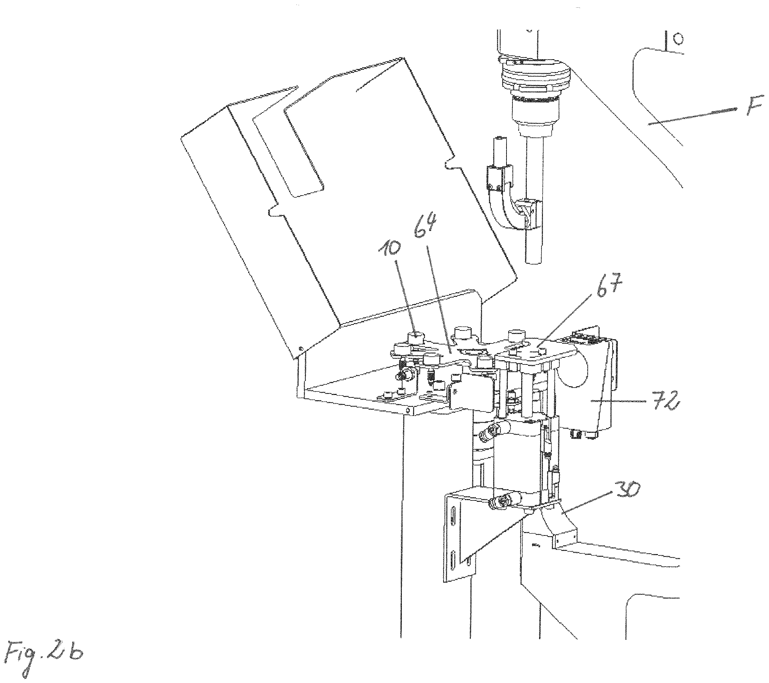

Bei diesem bevorzugten Verfahren zum Entfernen der Wechselmatrize 10 aus dem Matrizendom 30, welches in größerem Detail unten erläutert ist, wird vorzugsweise die Wechselmatrize 10 mit Hilfe eines Fixierdorns 66 (siehe Fig. 2a) oder einer Fixiervorrichtung 67 (siehe Fig. 2b) an dem Auswerfdorn 62 fixiert bzw. stabilisiert. Der Fixierdorn 66 oder die Fixiervorrichtung 67 greift dazu an einer Oberseite des Matrizenkopfes 12 an. Dadurch wird bei einem Angriff des Auswerfdorns 62 an der Wechselmatrize 10 die Wechselmatrize 10 zwischen dem Auswerfdorn 62 und dem Fixierdorn 66 oder der Fixiervorrichtung 67 gehalten. Bevorzugt greift der Fixierdorn 66 oder die Fixiervorrichtung 67 an der Wechselmatrize 10 an, noch bevor der Auswerfdorn 62 die Wechselmatrize 10 bewegt.

Gemäß unterschiedlicher bevorzugter Ausführungsformen vorliegender Erfindung werden der Auswerfdorn 62 und der Fixierdorn 66 bzw. die Fixiervorrichtung 67 durch jeweils einen Pneumatikzylinder bewegt. Ebenfalls bevorzugt sind hydraulische Zylinder, elektromotorische Stellglieder oder andere Antriebssysteme, mit denen eine Linearbewegung von Auswerfdorn 62 und Fixierdorn 66 bzw. die Fixiervorrichtung 67 in abstimmbarer Weise realisierbar sind. Gemäß bevorzugter Ausführungsformen vorliegender Erfindung wird der Auswerfdorn 62 durch nur einen Pneumatikzylinder, einen pneumatischen Mehrstellungszylinder oder durch zwei in Reihe hintereinander angeordnete und geschaltete pneumatische Zylinder (Tandemzylinder) bewegt. Nur ein Pneumatikzylinder bewegt vorzugsweise den Auswerfdorn 62 meist mit konstanter Verstellgeschwindigkeit. Bei einem Mehrstellungszylinder oder mehreren kombinierten Zylindern sind unterschiedliche Verstellgeschwindigkeiten der Zylinder ansteuerbar. Vorzugsweise wird dabei der Auswerfdorn 62 mit einer höheren Verstellgeschwindigkeit in den Matrizendom 30 eingefahren, als er mit Wechselmatrize 10 aus dem Matrizendom 30 ausgefahren wird. Beim Einsetzen einer Wechselmatrize 10 werden vorzugsweise diese Verstellgeschwindigkeiten in umgekehrter Reihenfolge angewandt Gemäß einer anderen bevorzugten Ausführungsform vorliegender Erfindung wird der Fixierdorn 66 bzw. die Fixiervorrichtung 67 durch einen Niederhalter des Setzgeräts F oder durch eine Vorrichtung mit Kolben-Zylinder-Antrieb und Haltefläche am Matrizenwechsler 60 oder angrenzend an den Matrizendom 30 gebildet. Eine entsprechende Fixiervorrichtung 67 ist in Fig. 2b gezeigt. Sie setzt sich aus einer Haltefläche zusammen, die mit einem Kolben-Zylinder-Antrieb bewegbar ist. Die Haltefläche muss ausreichend groß sein, um angreifend am Matrizenkopf eine Gegenkraft zur Wirkung des Auswerfdorns 62 bereitzustellen. Zudem ist sie vorzugsweise ausreichend klein, so dass sie zwischen benachbarten Halteabschnitten mit Halteöffnung 68 des Matrizenwechslers 60 frei bewegbar ist. Die Haltefläche wirkt in gleicher Weise wie die Spitze des oben diskutierten Fixierdorns 66. Daher gelten die Erläuterungen zum Fixierdorn 66 auch für die Fixiervorrichtung 67. Die Haltefläche wird bevorzugt durch einen Kolben-Zylinder-Antrieb (pneumatisch oder hydraulisch) oder durch ein anderes bekanntes lineares Stellglied (siehe oben) bewegt. In Fig. 2b ist die Haltefläche mit einem Stellglied verbunden, dass in Einsetzrichtung der Wechselmatrize 10 unterhalb der Haltefläche angeordnet ist. Die Haltefläche ragt seitlich über das Stellglied hinaus und deckt auf diese Weise eine im Matrizenwechsler 60 oder im Matrizendom 30 befindliche Wechselmatrize 10 ab. Sobald bevorzugt die Haltfläche an der Oberseite der Wechselmatrize 10 anliegt, beginnt die Bewegung der Wechselmatrize 10 durch den Auswerfdorn 62.

Um eine Wechselmatrize 10 im Matrizendom 30 des Setzgeräts einzusetzen, werden die oben beschriebenen Schritte zum Entfernen der Wechselmatrize 10 aus dem Matrizendom 30 in umgekehrter Reihenfolge durchgeführt. Bei bevorzugter Nutzung eines Matrizenhalters 64 mit einer Mehrzahl von Halteöffnungen 68 wird zunächst die Halteöffnung 68 mit der gewünschten Wechselmatrize 10 über der Durchgangsöffnung 32 des Matrizendoms 30 positioniert (E1). Um die Wechselmatrize 10 zu entnehmen, fährt der Auswerfdorn 62 durch die Durchgangsöffnung 32 in Anlage mit dem Matrizenschaft 14 (E2) und bevorzugt der Fixierdorn 66 in Anlage mit dem Matrizenkopf 12 (E3). Vorzugsweise liegt der Fixierdorn 66 an der Oberseite des Matrizenkopfes 12 an, bevor der Auswerfdorn 62 am Matrizenschaft 14 angreift.

Eine bevorzugt synchron ablaufende Bewegung von Fixierdorn 66 und Auswerfdorn 62 hebt den Matrizenkopf 12 aus der Halteöffnung 68 (E4) und der Matrizenhalter 64 wird nachfolgend gedreht (E5). Dabei bewegt sich der Matrizenschaft 14 durch die radiale Freimachung der Halteöffnung 68 und die Wechselmatrize 10 ist vollständig aus dem Matrizenhalter 64 entfernt. Um dieses Entfernen der Wechselmatrize 10 aus dem Matrizenhalter 64 zu erleichtern, sind angrenzend an die Halteöffnung 68 Aussparungen im Matrizenhalter 64 vorgesehen. Durch diese Aussparungen ist die Wechselmatrize 10 zwischen dem Fixierdorn 66 und dem Auswerfdorn 62 frei in den Matrizendom 30 einsetzbar (E6). Während der Auswerfdorn 62 durch die Durchgangsöffnung 32 abgesenkt wird, hält der Fixierdorn 66 die Wechselmatrize 10 auf dem Auswerfdorn 62, bis die Wechselmatrize 10 im Matrizendom 30 verriegelt ist (E7).

Es ist ebenfalls denkbar, dass der Auswerfdorn 62 das Entfernen und Einsetzen der Wechselmatrize 10 ohne den Fixierdorn 66 ausführt.

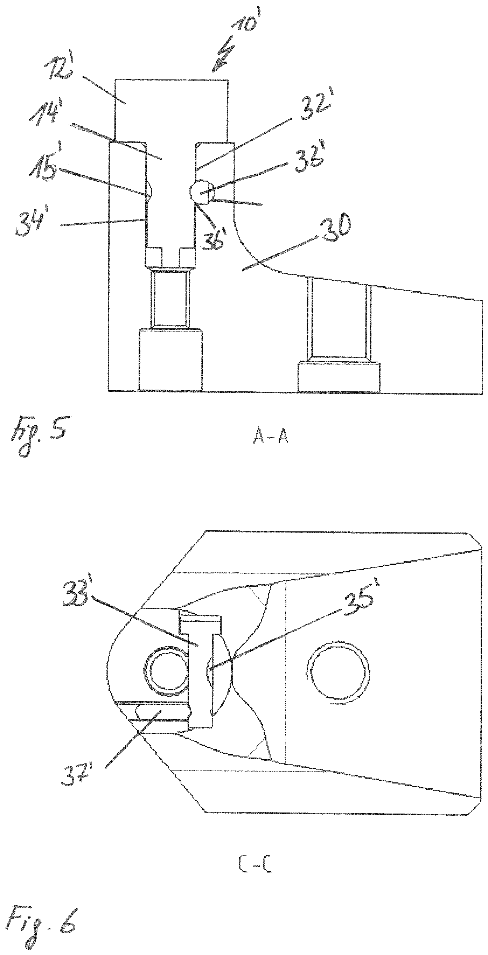

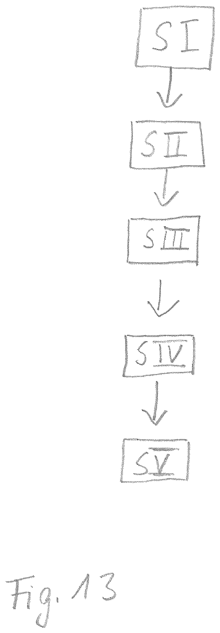

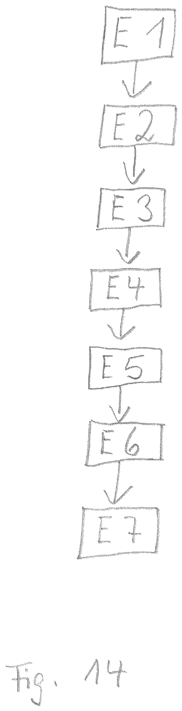

Unter Bezugnahme auf die Figuren 2 bis 12 werden die oben zusammengefassten bevorzugten Verfahrensschritte gemäß den Flussdiagrammen der Figur 13 und 14 mit Hilfe der bevorzugten konstruktiven Details der Erfindung nähert erläutert.

In Figur 2 ist der Matrizenhalter 64 in einer Entnahmeposition für eine Wechselmatrize 10 gezeigt. Zu diesem Zweck ist die Halteöffnung 68 mit der ausgewählten Wechselmatrize 10 über der Durchgangsöffnung 32 des Matrizendoms 30 positioniert. Die Wechselmatrize 30 liegt mit dem Matrizenkopf 12 auf dem Rand der Halteöffnung 68 auf und wird dadurch gehalten. Gemäß einer bevorzugten Ausgestaltung der Wechselmatrize 10 weist die schaftzugewandte Seite des Matrizenkopfes 12 einen als Radialsteg ausgebildeten verjüngten Axialabschnitt 24 auf. Ein Außendurchmesser des Axialabschnitts 24 ist derart an den Innendurchmesser der Halteöffnung 68 und der Durchgangsöffnung 32 abgepasst, dass der Matrizenschaft 14 über den Axialabschnitt 24 zumindest in der Durchgangsöffnung 32, vorzugsweise auch in der Halteöffnung 68, radial gestützt wird. Zudem ist der Außendurchmesser des Axialabschnitts 24 vorzugsweise größer als die Freimachung 69, so dass die Wechselmatrize 10 nur nach einem Anheben über die Verjüngung 22 aus der Halteöffnung 68 entfernbar ist. In Figur 2 befindet sich die radiale Freimachung 69 der Halteöffnung 68 oberhalb des Matrizendoms 30 an der einer Kamera 72 zugewandten Seite der Halteöffnung 68.

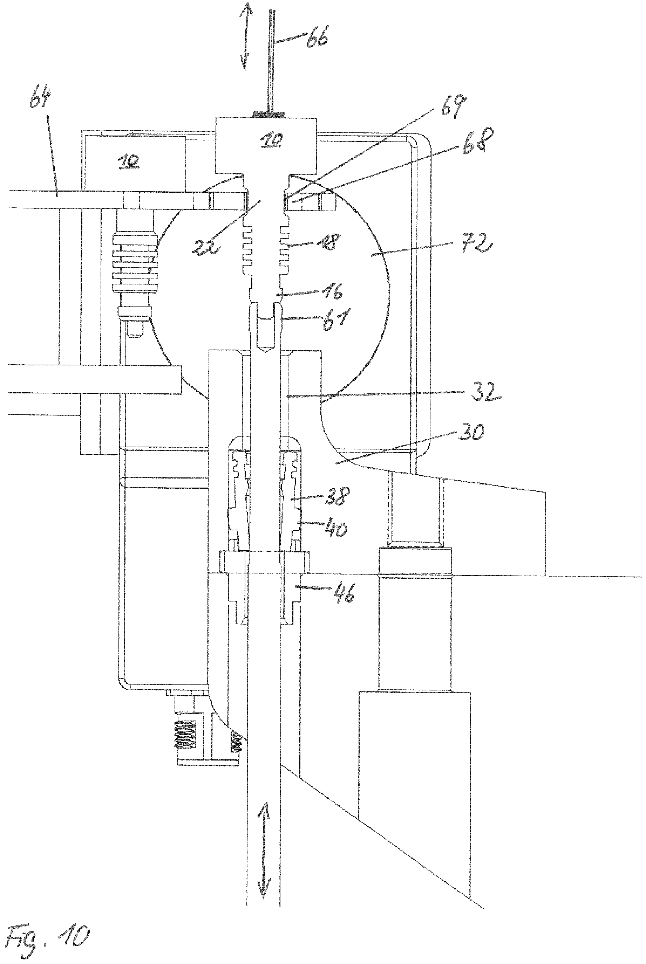

Der Matrizenhalter 64 besitzt vorzugsweise eine sternförmige Struktur, sodass in jedem Arm der sternförmigen Struktur eine Halteöffnung 68 angeordnet werden kann. Der Matrizenhalter 64 wird vorzugsweise über einen Motor 70 derart gedreht, dass die jeweilige Halteöffnung 68 über dem Matrizendom 30 angeordnet ist. Sobald die Wechselmatrize 10 durch den Auswerfdorn 62 angehoben worden ist (vgl. Fig. 10), dreht der Motor 70 den Matrizenhalter 64, sodass die Wechselmatrize 10 drehungsfrei durch die radiale Freimachung 69 aus der Halteöffnung 68 herausbewegt wird. Nachfolgend ist die Wechselmatrize 10 in den Matrizendom 30 einsetzbar und dort verriegelbar.

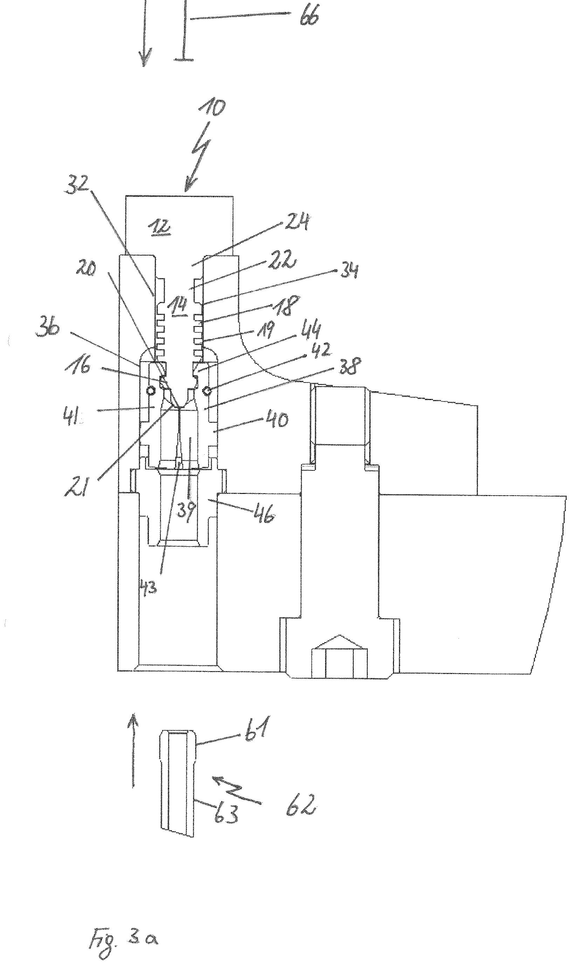

Figur 3a zeigt eine vergrößerte seitliche Schnittdarstellung des Matrizendoms 30, in dem eine Wechselmatrize 10 verriegelt ist. Die Wechselmatrize 10 umfasst an der Kopfunterseite den verjüngten Axialabschnitt 24. Der Durchmesser des verjüngten Axialabschnitts 24 ist bevorzugt an den Durchmesser der Durchgangsöffnung 32 des Matrizendoms 30 und an den Durchmesser der Halteöffnung 68 des Matrizenhalters 64 angepasst. Somit sorgt der verjüngte Axialabschnitt 24 bevorzugt für eine radiale Führung und Abstützung der Wechselmatrize 10 in der Halteöffnung 68 und in der Durchgangsöffnung 32. Dadurch ist die Wechselmatrize 10 auch nicht aus der Halteöffnung 68 entfernbar, solange sie nicht durch den Auswerfdorn 62 angehoben wird.

An den verjüngten Axialabschnitt 24 schließt sich vorzugsweise ein Verjüngungsabschnitt 22 an. Der Verjüngungsabschnitt 22 hat einen kleineren Durchmesser als der verjüngte Axialabschnitt 24. Gemäß einer bevorzugten Ausführungsform vorliegender Erfindung wird auf dem Verjüngungsabschnitt 22 eine Identifikationscodierung der Wechselmatrize 10 angeordnet. Da der Verjüngungsabschnitt 22 an beiden Seiten durch radial größere Abschnitte des Matrizenschafts 14 begrenzt wird, kommt der Verjüngungsabschnitt 22 weder mit dem Matrizendom 30 noch mit dem Matrizenhalter 64 in Berührung. Dadurch wird die Identifikationscodierung (nicht gezeigt) vor Beschädigungen geschützt.

An der kopfabgewandten Seite des Verjüngungsabschnitts 22 schließt sich ein freiliegender Radialsteg 18 an. Dieser weist bevorzugt den gleichen Durchmesser wie der verjüngte Axialabschnitt 24 auf, um den Matrizenschaft 14 in der Durchgangsöffnung 32 des Matrizendoms 30 radial zu führen und abzustützen. Es ist ebenfalls bevorzugt, den Radialsteg 18 mit einem kleineren Außendurchmesser als der Axialabschnitt 24 auszubilden (siehe unten). Freiliegend bedeutet in diesem Zusammenhang, dass der Radialsteg 18 an seinen axialen Seitenflächen auf einen geringeren Durchmesser als sein maximaler Durchmesser zurückspringt. Dadurch werden bevorzugt zusätzliche Anlageflächen in axialer Richtung des Matrizenschafts 14 bereitgestellt.

In axialer Richtung zum Radialsteg 18 beabstandet ist an der kopfabgewandten Seite des Matrizenschafts 14 ein weiterer Radialsteg 16 angeordnet. Der Radialsteg 16 stellt vorzugsweise in axialer Richtung einseitig oder beidseitig jeweils einen axialen Hinterschnitt bereit. Dieser dient der Verriegelung der Wechselmatrize 10 im Matrizendom 30. Gemäß einer Ausführungsform vorliegender Erfindung hat der Radialsteg 16 eine geringere radiale Ausdehnung als der Radialsteg 18, um die Verriegelung des Radialstegs 16 in einer Raststruktur 44 (siehe unten) zu erleichtern.

Der Matrizenschaft 14 läuft vorzugsweise in der Auswurffläche 20 aus. Diese Auswurffläche 20 kann unterschiedlich gestaltet sein und ist vorzugsweise an ein angreifendes Ende des Auswerfdorns 62 angepasst. Gemäß Fig. 3a ist die Auswurffläche 20 an einem zylindrischen Ende des Matrizenschafts 14 vorgesehen, wobei vorzugsweise eine Anfasung 21 ein Zusammenwirken mit Halteschalen 38 (siehe unten) unterstützt. Diese Auswurffläche 20 wirkt mit einem geschlossenen Führungsende 61 des Auswerfdorns 62 (nicht gezeigt) zusammen.

Anhand von Fig. 10 ist erkennbar, dass auch die axiale kopfabgewandte Seite des Radialstegs 16 als Auswurffläche 20 dienen kann. Dies ist dann bevorzugt, wenn der Auswerfdorn 62 am Führungsende 61 hohl ausgebildet ist. In diesem Fall wird das kopfabgewandte Ende des Matrizenschafts 14 im Auswerfdorn 62 aufgenommen, um die Wechselmatrize 20 besser am Auswerfdorn 62 zu halten und kontrollierter zu bewegen.

Die Durchgangsöffnung 32 des Matrizendorns 30 umfasst gemäß einer weiteren bevorzugten Ausführungsform vorliegender Erfindung einen Führungsabschnitt 34, um den Matrizenschaft 14 über den mindestens einen Radialsteg 18 und den verjüngten Axialabschnitt 24 zu führen und zu stabilisieren. An den Führungsabschnitt 34 schließt sich mit radialer Aufweitung gegenüber dem Führungsabschnitt 34 ein Verriegelungsabschnitt 36 an. Innerhalb des Verriegelungsabschnitts 36 sind mindestens zwei Halteschalen 38 vorzugsweise federvorgespannt derart angeordnet, dass sie eine innere Öffnung 39 für den Auswerfdorn 62 und den Matrizenschaft 14 freilassen. Die radial einwärts gerichtete Federvorspannung der Halteschalen 38 wird bevorzugt durch eine Ringfeder 42 oder ein anderes Federelement erzeugt. Zur Unterstützung der Schwenkfunktion der Halteschalen 38 ist die Ringfeder 42 außermittig in dem der Wechselmatrize 10 zugewandten Teil der Halteschalen 38 angeordnet.

Eine radiale Außenseite der Halteschalen 38, hier vorzugsweise zwei Halteschalen, ist jeweils um eine radiale Länge eines Kippstegs 40 von einer radialen Innenseite der Durchgangsöffnung 32 beabstandet. Der Kippsteg 40 wird ebenfalls ähnlich wie die Ringfeder 42 bevorzugt außermittig in Richtung des matrizenabgewandten Endes der Halteschalen 38 versetzt angeordnet. Die zum Kippsteg 40 axial in Richtung Wechselmatrize 10 benachbarte Seite 41 der Halteschalen 38 bildet einen Kipphebel, sodass die Halteschalen 38 radial auswärts ausgelenkt werden können. Es ist daher ebenfalls bevorzugt, dass die Halteschalen 38 axial mit dem Kipphebel 40 an ihrem matrizenabgewandten Ende auslaufen.

Um das radiale Auslenken der matrizenzugewandten Seiten 41 der Halteschalen 38 zu unterstützen, ist vorzugsweise ein Spalt 43 zwischen den beiden Halteschalen 38 an deren matrizenabgewandtem Ende umgekehrt V-förmig geöffnet. Dieser Spalt 43 schließt sich, wenn die Seiten 41 durch den in Richtung Wechselmatrize 10 bewegten Auswerfdorn 62 radial auswärts gedrückt werden.

Die Halteschalen 38 werden formschlüssig innerhalb des Verriegelungsabschnitts 36 mithilfe eines Einsatzelements 46 gehalten. Das Einsatzelement 46 ist hohlzylindrisch geformt und vorzugsweise über ein Außengewinde, einen Presssitz oder eine andere geeignete Verbindung in der Durchgangsöffnung 32 des Matrizendoms 30 befestigt.

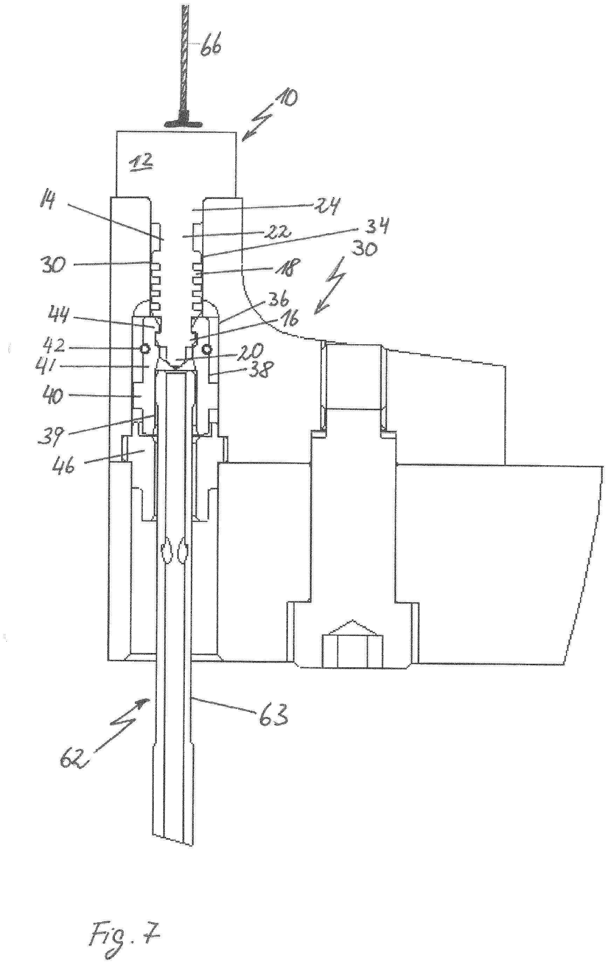

Wie man anhand von Fig. 3a erkennen kann, weist die innere Öffnung 39 in Richtung Wechselmatrize 10 nach einer bevorzugten Anfasung bzw. nach einem stetigen Übergang einen Abschnitt mit einem ersten Innendurchmesser auf. Dieser erste Innendurchmesser ist an einen Außendurchmesser des Führungsendes 61 des Auswerfdorns 62 angepasst. Beim Einlaufen des Auswerfdorns 62 in die innere Öffnung 39, im Speziellen in den Abschnitt mit dem ersten Innendurchmesser - werden daher die Halteschalen 38 nicht radial auswärts ausgelenkt (siehe Fig. 7).

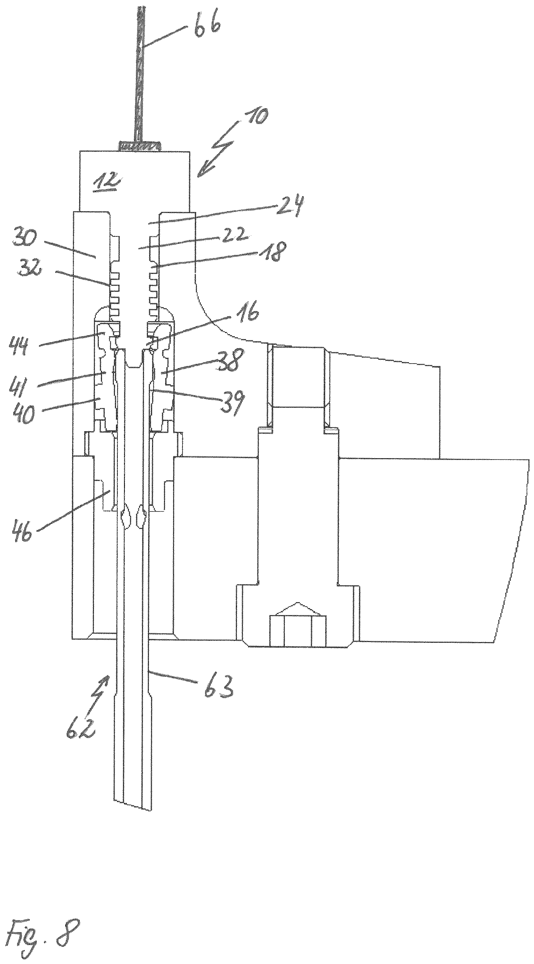

In Richtung der Wechselmatrize 10 und in axialer Richtung beabstandet vom Kippsteg 40 verjüngt sich die innere Öffnung 39 auf einen zweiten Innendurchmesser, der geringer ist als der Außendurchmesser des Führungsendes 61 des Auswerfdorns 62. Sobald das Führungsende 61 des Auswerfdorns 62 diesen verjüngten Bereich mit der Raststruktur 44 erreicht, werden die Seiten 41 der Halteschalen 38 radial auswärts gedrückt. Gleichzeitig bewegen sich die radialen Innenseiten der inneren Öffnung 39 am matrizenabgewandten Ende der Halteschalen 38 radial einwärts (siehe Fig. 8), da sie ebenfalls um die Kippstege 40 verschwenkt werden. Um hier ein Festklemmen des Auswerfdorns 62 in der inneren Öffnung 39 am matrizenabgewandten Ende der Halteschalen 38 zu vermeiden, weist der Auswerfdorn 62 in einem dem Führungsende 61 folgenden Abschnitt 63 einen geringeren Durchmesser als am Führungsende 61 auf. Der Unterschied im Durchmesser von Führungsende 61 und Abschnitt 63 ist an das Verkippen bzw. Verschwenken der Halteschalen 38 angepasst, mit dem die Raststruktur 44 vom Radialsteg 16 gelöst, aber der Auswerfdorn 62 nicht geklemmt werden darf.

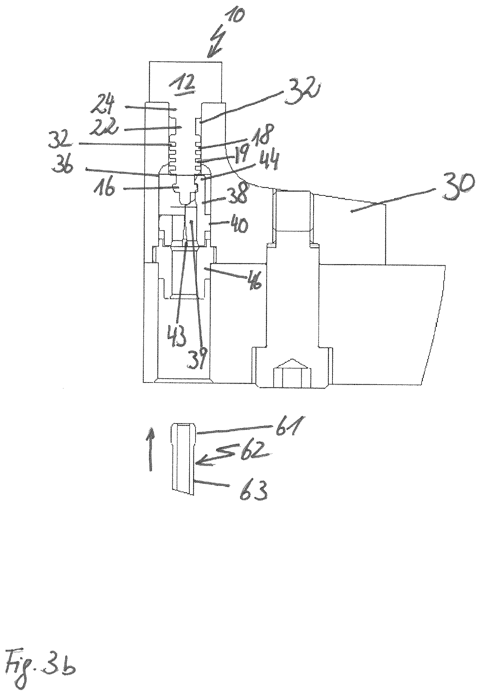

Eine nicht erfindungsgemäße Konstruktion des Matrizendoms 30 ist in Fig. 3b gezeigt. Im Unterschied zur Ausführungsform gemäß Fig. 3a ist hier nur eine Halteschale 38 vorgesehen, die vorzugsweise gegen die Wand der Öffnung 36 federvorgespannt ist. Die Halteschale 38 und auch die übrigen konstruktiven Elemente des Matrizendoms 30 arbeiten auf die gleiche Weise, wie es Bezugnehmend auf Fig. 3a beschrieben wurde. Die nur eine Halteschale 38 verschwenkt über den Kippsteg 40, wenn der Auswerfdorn 62 in Richtung Matrizenkopf 12 in die Durchgangsöffnung 32 hinein bewegt wird. Nachdem eine Wechselmatrize 10 im Matrizendom 30 eingesetzt worden ist und beim Entfernen des Auswerfdorns 62 aus der Durchgangsöffnung 32 verriegelt sich die Raststruktur 44 der nur einen Halteschale 38 am Radialsteg 16. Die Raststruktur 44 greift dabei bevorzugt einseitig oder beidseitig am Radialsteg 16 an.

Durch das Verschwenken der Halteschalen 38 über die Kippstege 40 radial auswärts wird der Radialsteg 16 aus der verriegelnden Raststruktur 44 gelöst. Gleichzeitig taucht bevorzugt das Ende des Matrizenschafts 14 in den hohlen Auswerfdorn 62 ein, bis sich der Radialsteg 16 am Führungsende 61 des Auswerfdorns 62 abstützt. Gemäß einer bevorzugten Ausführungsform vorliegender Erfindung besteht die verriegelnde Raststruktur 44 aus einer Verrastungsnut, sodass der Radialsteg 16 bezogen auf seine axialen Seitenflächen beidseitig umgriffen wird. Daraus folgt, dass beide axialen Seitenflächen des Radialstegs 16 jeweils einen axialen Hinterschnitt in Einsetz- und Auszugsrichtung des Matrizenschafts 14 in der Durchgangsöffnung 32 des Matrizendoms 30 bilden. Es ist ebenfalls bevorzugt, dass die Raststruktur 44 sich lediglich einseitig am Radialsteg 16 derart verriegelt, dass ein axiales Entfernen der Wechselmatrize 10 aus der Durchgangsöffnung 32 des Matrizendoms 30 verhindert ist.

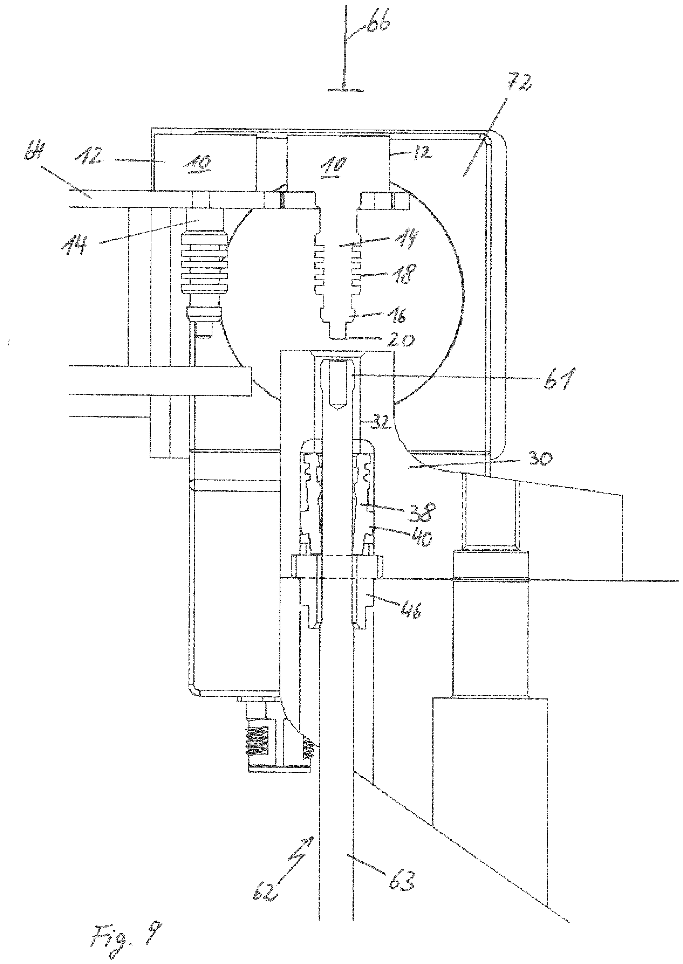

Wird der Auswerfdorn 62 weiter in Richtung Wechselmatrize 10 bewegt, wird die Wechselmatrize 10 aus dem Matrizendom 30 entfernt und in Ausrichtung in einer Halteöffnung des Matrizenhalters 64 gebracht (vgl. Fig. 10). Danach erfolgt das Absenken der Wechselmatrize 10 in die Halteöffnung 68, nachdem die Wechselmatrize 10 durch die radiale Freimachung 69 in der Halteöffnung 68 angeordnet worden ist (vgl. Fig. 9).

Bevor die Wechselmatrize 10 in der Halteöffnung 68 abgelegt wird, erfasst die Kamera 72 die Identifikationscodierung (nicht gezeigt). Gemäß einer ersten bevorzugten Ausführungsform vorliegender Erfindung ist die Identifikationscodierung auf dem Verjüngungsabschnitt 22 des Matrizenschafts 14 angeordnet. Die Identifikationscodierung kann aus einem Strichcode, einem 2D-Code, einer Nummerierung oder einer anderen erfassbaren Codierung bestehen. Daher ist es ebenfalls bevorzugt, die Kamera 72 durch einen Scanner oder einen anderen Sensor zu ersetzen. Vorzugsweise wird die Identifikationscodierung vor dem Ablegen einer Wechselmatrize 10 in der Halteöffnung 68 und vor dem Einsetzen einer Wechselmatrize 10 in den Matrizendom 30 erfasst und elektronisch gespeichert.

Gemäß einer weiteren bevorzugten Ausführungsform vorliegender Erfindung wird der Radialsteg 18 als Identifikationscodierung eingesetzt. Zu diesem Zweck ist der Radialsteg 18 in seiner axialen Länge variierbar, um über die Länge des Radialstegs 18 eine erfassbare Matrizeninformation zu vermitteln. Des Weiteren bevorzugt weist der Radialsteg 18 einen oder eine Mehrzahl von Einstichen 19 auf. Die Einstiche 19 sind in Anzahl und axialer Breite einstellbar, um auf diese Weise weitere Matrizeninformationen zu übermitteln. Nutzt man die oben beschriebene Kamera 72 oder einen Scanner, so ist der Radialsteg 18 mit Einstichen 19 in einer seitlichen Ansicht erfassbar. Dabei erscheint der Radialsteg 18 mit Einstichen 19 ähnlich einem Strichcode zur Identifikation der Wechselmatrize 10.

In den Fig. 9 bis 12 ist das Verfahren zum Einsetzen einer anderen Wechselmatrize 10 in den Matrizendom 30 veranschaulicht. Gemäß einer bevorzugten Ausführungsform dieses Verfahrens wird zunächst die Halteöffnung 68 mit der ausgewählten Wechselmatrize 10 über dem Auswerfdorn 62 positioniert (siehe Fig. 9). In Fig. 9 ist ebenfalls erkennbar, dass der Matrizenhalter 64 mehrere Wechselmatrizen 10 enthält, aus denen bspw. mit Unterstützung eines PCs (nicht gezeigt) bzw. einer elektronischen Datenverarbeitung die passende Wechselmatrize 10 ausgewählt werden kann. Entsprechend wird dann die Halteöffnung 68 über den Auswerfdorn 62 gedreht, die die ausgewählte Wechselmatrize 10 enthält.

Gemäß Fig. 10 fährt danach der Auswerfdorn 62 aus dem Matrizendom 30 aus, erfasst das kopfabgewandte Ende des Matrizenschafts 14 und hebt die Wechselmatrize 10 innerhalb der Halteöffnung 68 an. Dadurch löst sich der verjüngte Axialabschnitt 24 aus der Halteöffnung 68. Vorzugsweise ist nun der Verjüngungsabschnitt 22 mit der radialen Freimachung 69 der Halteöffnung 68 ausgerichtet. Ebenfalls bevorzugt ist der Verjüngungsabschnitt 22 in seinem Außendurchmesser kleiner ausgebildet als die Breite der radialen Freimachung 69. Daher kann die Wechselmatrize 10 durch die radiale Freimachung 69 der Halteöffnung 68 aus der Halteöffnung 68 entnommen werden. Zur Realisierung dieser Entnahme wird bei angehobener Wechselmatrize 10 gemäß Fig. 10 der Matrizenhalter 64 soweit gedreht, dass die Wechselmatrize 10 zwischen zwei benachbarten Halteöffnungen 68 angeordnet ist.

Weiterhin erfasst die Kamera 72 im angehobenen Zustand der Wechselmatrize 10 deren Identifikationscodierung, die bevorzugt auf dem Verjüngungsabschnitt 22 angeordnet oder durch die Konstruktion des Radialstegs 18 mit Einstichen 19 gespeichert und ermittelbar ist.

Gemäß einer bevorzugten Ausführungsform vorliegender Erfindung greift der Fixierdorn 66 vor dem Anheben der Wechselmatrize 10 durch den Auswerfdorn 62 an der Oberseite des Matrizenkopfs 12 an. Danach wird die Wechselmatrize 10 mit einer abgestimmten Bewegung von Fixierdorn 66 und Auswerfdorn 62 aus der Halteöffnung 68 gehoben, um den Matrizenhalter 64 nachfolgend zu drehen (siehe oben).

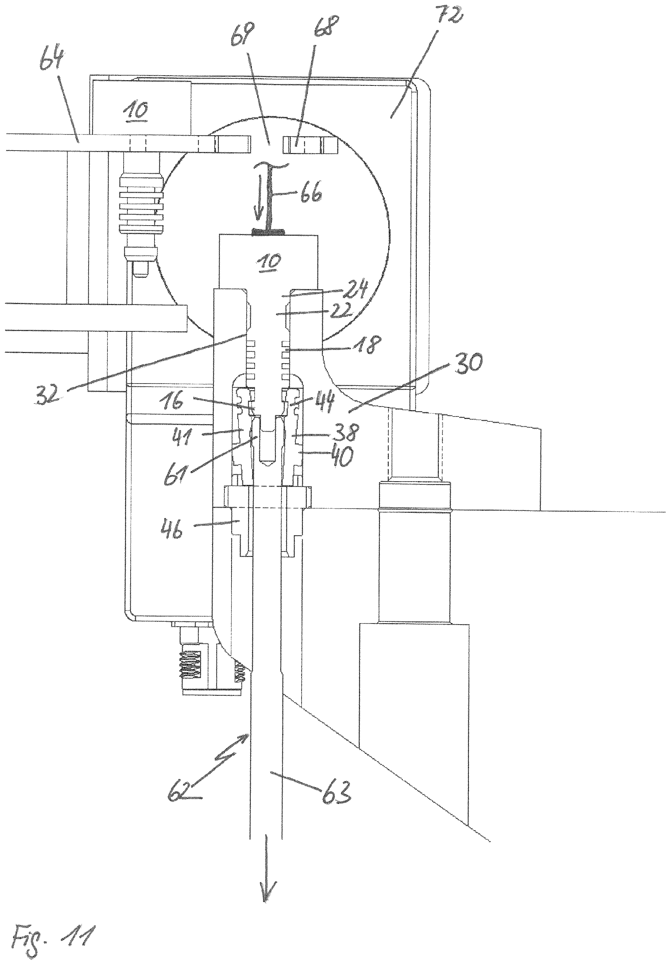

Wie aus Fig. 11 hervorgeht, wird nach dem Lösen der Wechselmatrize 10 aus der Halteöffnung 68 der Auswerfdorn 62 in die Durchgangsöffnung 32 des Matrizendoms 30 abgesenkt. Da der Auswerfdorn 62 die Halteschalen 38 offenhält bzw. in eine geöffnete Stellung radial auswärts kippt (siehe oben), bewegt sich der Matrizenschaft 14 bis zum Anliegen des Matrizenkopfs 12 an einer Oberseite des Matrizendoms 30 in die Durchgangsöffnung 32 hinein. Das Erreichen dieser Position wird bevorzugt durch die Wirkung des Fixierdorns 66 unterstützt, der die Wechselmatrize 10 ständig in Anlage am Auswerfdorn 62 hält oder den Matrizenschaft 14 in die Durchgangsöffnung 32 des Matrizendoms 30 drückt.

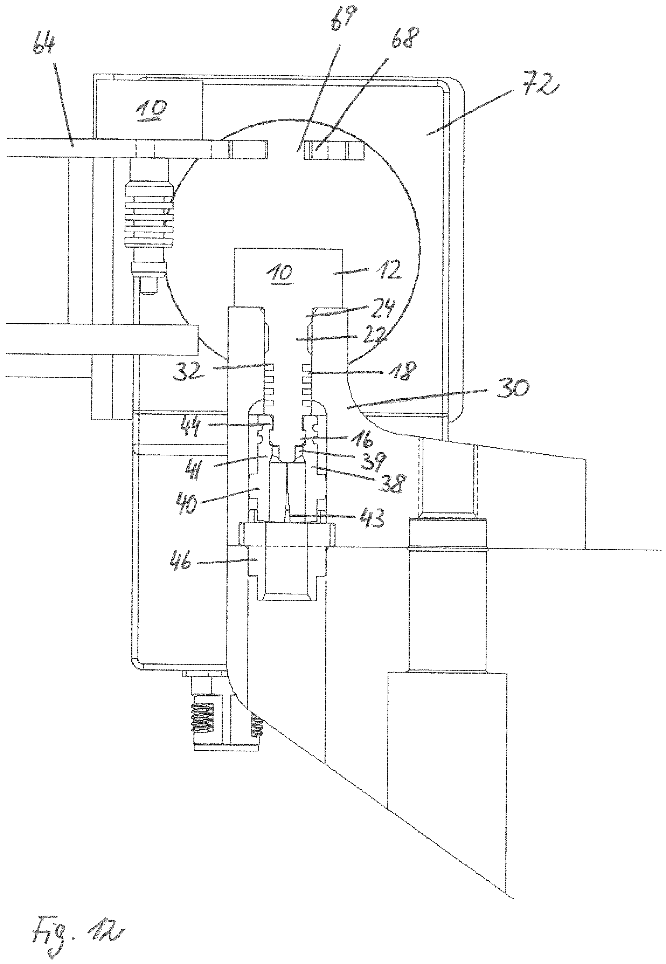

Sobald der Matrizenschaft 14 die tiefste Position in der Durchgangsöffnung 32 erreicht hat, wird der Auswerfdorn 62 weiter aus der inneren Öffnung 39 der Halteschalen 38 heraus bewegt. Sobald das Führungsende 61 des Auswerfdorns 62 den verjüngten Bereich der inneren Öffnung 39 verlassen hat, werden die Halteschalen 38 durch die Federvorspannung der Ringfeder 42 in die Ausgangsposition zurückgestellt. Dadurch verriegelt sich die Raststruktur 44 am Radialsteg 16 und der Spalt 43 öffnet sich wieder, wie es in Fig. 12 gezeigt ist.

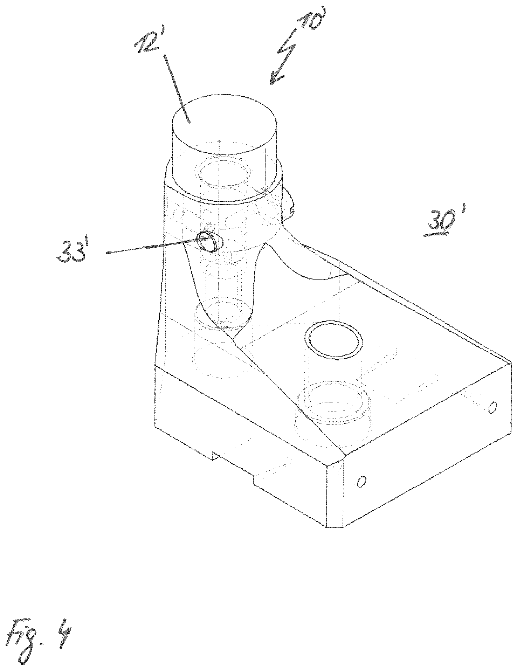

Eine weitere bevorzugte Ausführungsform eines Matrizendoms 30' ist in den Fig. 4 bis 6 gezeigt. Der Matrizenschaft 14' wird ebenfalls in der Durchgangsöffnung 32' des Matrizendoms 30' gehalten und durch den Auswerfdorn 62 entfernt. In gleicher Weise greift bevorzugt der Fixierdorn 66 an der Oberseite des Matrizenkopfs 12 an, wie es oben beschrieben worden ist. Der Matrizenschaft 14' weist zur Verriegelung im Matrizendom 30' eine umlaufende Radialnut 15' auf. Innerhalb des Matrizendoms 30' ist ein drehbarer Bolzen 33' angeordnet, der quer zur Durchgangsöffnung 32' des Matrizendoms 30' verläuft. Der Bolzen 33' kreuzt ähnlich einer Sehne die Durchgangsöffnung 32' und greift dabei in die Radialnut 15' des Matrizenschafts 14' ein.

Auf Höhe der Radialnut 15' umfasst der Bolzen 33' einseitig einen Kreisausschnitt 35'. Wird der Bolzen 33' derart gedreht, dass der Kreisausschnitt in der Durchgangsöffnung 32 angeordnet ist, dann ist die Wechselmatrize 10' in die Durchgangsöffnung 32' einsetzbar und aus dieser entfernbar. Wurde der Bolzen 33' gedreht, sodass der Kreisausschnitt 35' außerhalb der Durchgangsöffnung 32' angeordnet ist, blockiert der Bolzen 33' innerhalb der Radialnut 15 den Matrizenschaft 14' in der Durchgangsöffnung 32'.

Zum Drehen des Bolzens 33' weist dieser bevorzugt ein Angriffsmerkmal, wie bspw. einen Schlitz, einen Sechskant oder eine passende Verbindung mit einem mechanischen oder elektromotorischen Stellglied, auf. Zum Arretieren des Bolzens 33' in seiner Drehwinkelposition ist vorzugsweise ein Kugeldruckstück 37', eine Madenschraube oder eine andere bekannte Arretierung vorgesehen.

Nach Lösen der Arretierung durch Drehen des Bolzens 33' ist die Wechselmatrize 10' in gleicher Weise wie oben beschrieben mit dem Auswerfdorn 62 und dem Fixierdorn 66 aus dem Matrizendom 30' entfernbar, im Matrizenhalter 64 positionierbar und in den Matrizendom 30' einsetzbar.

### Bezugszeichenliste

- F: Fügegerät
- S: System
- 10: Wechselmatrize
- 12: Matrizenkopf
- 14: Matrizenschaft
- 15': Radialnut
- 16: erster Radialsteg
- 18: zweiter Radialsteg
- 19: Einstich
- 20: Auswurffläche
- 21: Anfasung
- 22: Verjüngungsabschnitt
- 24: verjüngter Axialabschnitt
- 30, 30': Matrizendom
- 32, 32': Durchgangsöffnung
- 33': drehbarer Bolzen
- 34: Führungsabschnitt
- 36: Verriegelungsabschnitt
- 38: Halteschalen
- 39: innere Öffnung
- 40: Kippsteg
- 42: Feder/Ringfeder
- 43: Spalt
- 44: Raststruktur
- 46: Einsatzelement
- 60: Matrizenwechsler
- 61: Führungsende des Auswerfdorns
- 62: Auswerfdorn
- 63: Abschnitt mit geringerem Durchmesser
- 64: Matrizenhalter
- 66: Fixierdorn
- 67: Fixiervorrichtung
- 68: Halteöffnung
- 69: radiale Freimachung
- 70: Motor
- 72: Kamera

## Patentansprüche

1. Wechselmatrize (10) eines Fügewerkzeugs (6), insbesondere eines Setzgeräts, die einen Matrizenkopf (12) mit einer Oberseite und einer Unterseite aufweist sowie einen Matrizenschaft (14), der sich senkrecht von der Unterseite des Matrizenkopfes (12) erstreckt und angepasst ist, um drehungsfrei in einem Matrizendom (30) aufnehmbar und verriegelbar zu sein, wobei der Matrizenschaft (14) umfasst:
a. mindestens einen ersten Radialsteg (16), der mit einer dem Matrizenkopf (12) zugewandten Seite einen axialen Hinterschnitt bildet, über den der Matrizenschaft (14) allein über eine geradlinige Einsetzbewegung im Matrizendom (30) verriegelbar ist,
b. mindestens einen zweiten Radialsteg (24), dessen radiale Länge an einen Durchmesser des Matrizendoms (30) angepasst ist, um eine laterale Führung des Matrizenschafts (14) im Matrizendom (30) zu gewährleisten, und der zwischen dem Matrizenkopf (12) und dem ersten Radialsteg (16) angeordnet ist, und
c. eine Auswurffläche (20), mit der die Wechselmatrize (10) aus dem Matrizendom (30) ausschiebbar und die benachbart zum freien Ende des Matrizenschafts (14) gegenüber dem Matrizenkopf (12) angeordnet ist, **dadurch gekennzeichnet, dass**
d. der mindestens eine erste Radialsteg (16) mit einer dem Matrizenkopf (12) abgewandten Seite einen axialen Hinterschnitt bildet und
e. die Wechselmatrize (10) einen sich axial über den ersten Radialsteg (16) hinaus erstreckenden Matrizenschaft (14) aufweist.

2. Wechselmatrize (10) gemäß Patentanspruch 1, die eine Matrizenkodierung aufweist, die auf oder an dem Matrizenschaft (14) angeordnet und optisch auswertbar ist.

3. Wechselmatrize (10) gemäß Patentanspruch 2, deren Matrizenschaft (14) einen radialen Verjüngungsabschnitt (22) mit einer geringeren radialen Ausdehnung als der zweite Radialsteg (24) aufweist, auf dem die Matrizenkodierung angeordnet ist, und/oder deren Matrizenschaft (14) einen dritten Radialsteg (18) umfasst, der über eine axiale Länge und mindestens einen Einstich (19) die erfassbare Matrizenkodierung darstellt.

4. Wechselmatrize (10) gemäß Patentanspruch 1, deren Matrizenkopf (12) einen radial verjüngten Axialabschnitt (24) aufweist, der den zweiten Radialsteg (24) bildet, der sich in Richtung Matrizenschaft (14) erstreckt und der in einer radialen Ausdehnung an den Durchmesser des Matrizendoms (30) angepasst ist.

5. Matrizendom (30) eines Fügegeräts, insbesondere eines Setzgeräts, in dem ein Matrizenschaft (14) einer Wechselmatrize (10) gemäß einem der Patentansprüche 1 bis 4, aufnehmbar und drehungsfrei verriegelbar ist, und der die folgenden Merkmale aufweist:
a. eine hohlzylindrische Durchgangsöffnung (32) zur Aufnahme und Führung des Matrizenschafts (14), die einen axialen Führungsabschnitt (34) und einen dazu benachbarten axialen Verriegelungsabschnitt (36) umfasst, wobei
b. im Verriegelungsabschnitt (36) eine formschlüssig wirkende und federvorgespannte Verriegelungsanordnung (38, 42) vorgesehen und derart konfiguriert ist, dass ein Matrizenschaft (14) über ein drehungsfreies Einsetzen des Matrizenschafts (14) in einer Einsetzrichtung in den Verriegelungsabschnitt (36) darin automatisch verriegelbar ist, wobei
c. die Verriegelungsanordnung (38, 42) derart konfiguriert ist, dass der Matrizenschaft (14) über ein Einstecken eines Auswerfdorns (62) in die Durchgangsöffnung (32) in einer der Einsetzrichtung entgegengesetzten Auswerfrichtung aus der Verriegelungsanordnung (36) automatisch lösbar und aus dem Matrizendom (30) entfernbar ist, so dass
d. allein durch eine axiale Bewegung des Matrizenschafts (14) innerhalb des Matrizendoms (30) und des Auswerfdorns (62) innerhalb des Matrizendoms (30) das Anordnen, Verriegeln und Entfernen der Wechselmatrize (10) stattfinden kann, **dadurch gekennzeichnet, dass**
e. der Matrizendom (30) im Verriegelungsabschnitt (36) eine Mehrzahl von Halteschalen (38) aufweist, die jeweils an einer radialen Außenseite einen Kippsteg (40) umfassen, sodass eine Innenseite der Halteschale (38) um den Kippsteg (40) verschwenkbar ist.

6. Matrizendom (30) gemäß Patentanspruch 5, deren Halteschalen (38) axial beabstandet zum Kippsteg (40) in eine Ausgangsposition federvorgespannt sind, sodass die Halteschalen (38) nach einem Verschwenken automatisch in die Ausgangsposition zurückschwenkbar sind.

7. Matrizendom (30) gemäß Patentanspruch 5 oder 6, dessen Verriegelungsabschnitt (36) in der Durchgangsöffnung (32) einen größeren Durchmesser als der Führungsabschnitt (34) aufweist und die Halteschalen (38) formschlüssig mithilfe eines Einsatzelements (46) im Verriegelungsabschnitt (36) angeordnet sind.

8. Matrizendom (30) gemäß Patentanspruch 5 oder 6, deren Mehrzahl von Halteschalen (38), vorzugsweise zwei Halteschalen (38), eine zumindest zweistufige Durchgangsöffnung (39) definieren, die benachbart zum Kippsteg (40) einen größeren Durchmesser als entfernt vom Kippsteg (40) aufweist und die entfernt vom Kippsteg (40) eine radial einwärts ragende Raststruktur (44), insbesondere einen Raststeg oder eine Rastnut, umfasst.

9. Matrizendom (30') eines Fügegeräts (F), insbesondere eines Setzgeräts, in dem ein Matrizenschaft (14') einer Matrize (10'), der zur Verriegelung im Matrizendom (30') eine umlaufende Radialnut (15') aufweist, aufnehmbar und drehungsfrei verriegelbar ist, und der die folgenden Merkmale aufweist:
a. eine hohlzylindrische Durchgangsöffnung (32') zur Aufnahme und Führung des Matrizenschafts (14'), die einen axialen Führungsabschnitt (34') und einen dazu benachbarten axialen Verriegelungsabschnitt (36') umfasst, **dadurch gekennzeichnet, dass**
b. im Verriegelungsabschnitt (36') eine formschlüssig wirkende Verriegelungsanordnung mit einem drehbaren Verriegelungselement (33') vorgesehen ist, so dass ein Matrizenschaft (14') über ein drehungsfreies Einsetzen des Matrizenschafts (14') in einer Einsetzrichtung in den Verriegelungsabschnitt (36') und durch Drehen des Verriegelungselements (33') darin verriegelbar und darin entriegelbar ist und über ein Einstecken eines Auswerfdorns (62) in die Durchgangsöffnung (32') in einer der Einsetzrichtung entgegengesetzten Auswerfrichtung aus der Verriegelungsanordnung (36') und dem Matrizendom (30') entfernbar ist, in dem
c. das Verriegelungselement (33') stiftartig mit einer radialen asymmetrischen Verjüngung (35') ausgebildet ist und die Durchgangsöffnung (32') teilweise durchläuft, so dass bei einer Drehung des Verriegelungselements (33') um eine Längsachse des Verriegelungselements (33') die Durchgangsöffnung (32') durch die Verjüngung (35') blockierbar oder freigebbar ist.

10. Matrizenwechsler (60) für eine Wechselmatrize (10) eines Fügegeräts (F), insbesondere eines Setzgeräts, die in einem Matrizendom (30) des Fügegeräts (F) anordenbar ist, der eine Durchgangsöffnung (32) aufweist, wobei der Matrizenwechsler (60) die folgenden Merkmale umfasst:
a. einen Matrizenhalter (64) mit mindestens einer Halteöffnung (68), die an die Wechselmatrize (10) angepasst ist, derart dass ein Matrizenschaft (14) in der Halteöffnung (68) aufnehmbar und ein Matrizenkopf (12) an einem Rand der Halteöffnung (68) abstützbar ist und die mindestens eine Halteöffnung (68) und der Matrizenschaft (14) relativ zueinander bewegbar sind, so dass die Wechselmatrize (10) innerhalb der Halteöffnung (68) anordenbar ist, **dadurch gekennzeichnet, dass**
b. die Halteöffnung (68) eine radiale Freimachung (69) zum radialen Einsetzen des Matrizenschafts (14) in die Halteöffnung (68) aufweist, und der Matrizenwechsler (60) weiter umfasst:
c. einen axial verschiebbar angeordneten Auswerfdorn (62), der an den Matrizendom (30) derart angepasst ist, dass der Auswerfdorn (62) vollständig durch die Durchgangsöffnung (32) des Matrizendoms (30) bewegbar ist, um eine Wechselmatrize (10) aus dem Matrizendom (30) auszuwerfen.

11. Matrizenwechsler (60) gemäß Patentanspruch 10, dessen Matrizenhalter (64) eine drehbar angeordnete Scheibe mit einer Mehrzahl von Halteöffnungen (68) umfasst, deren Halteöffnungen (68) gezielt benachbart zum Matrizendom (30) bewegbar sind.

12. Matrizenwechsler (60) gemäß Patentanspruch 10 oder 11, der einen koaxial zum Auswerfdorn axial bewegbar angeordneten Fixierdorn (66) oder eine Fixiervorrichtung (67) umfasst, der/die angepasst ist, um an einer Oberseite der Wechselmatrize (10) anzugreifen und sich angepasst an den Auswerfdorn (62) zu bewegen.

13. System (S) zum Wechseln einer Wechselmatrize (10) an einem Fügegerät (F), insbesondere ein Setzgerät, das ein Fügegerät (F) mit einem Matrizendom (30, 30') gemäß einem der Patentansprüche 5-9 und einen Matrizenwechsler (60) gemäß einem der Patentansprüche 10-12 umfasst, die vorzugsweise angepasst sind, um eine Wechselmatrize (10, 10') gemäß einem der Patentansprüche 1-4 aus dem Matrizendom (30, 30') zu entfernen oder in diesen einzusetzen.

14. Verfahren zum Entfernen einer Wechselmatrize (10) eines Fügegeräts (F), die in einem Matrizendom (30) mit Durchgangsöffnung (32) befestigt ist, und das Verfahren ist **gekennzeichnet durch** die folgenden Schritte:
a. Anordnen des Matrizendoms (30) gemäß einem der Patentansprüche 5 bis 9 oberhalb eines Auswerfdorns (62) (S1),
b. Bewegen des Auswerfdorns (62) durch den Matrizendom (30), wobei der Auswerfdorn (62) die Wechselmatrize (10) aus einem Verriegelungsabschnitt (36) des Matrizendoms (30) löst (S2),
c. Bewegen der Wechselmatrize (10) mit dem Auswerfdorn (62) über den Matrizendom (30) hinaus in seitliche Ausrichtung mit einer Halteöffnung (68) eines Matrizenhalters (64) eines Matrizenwechslers (60) gemäß Patentanspruch 10 (S3),
d. relatives Bewegen von Matrizenhalter (64) und Wechselmatrize (10) zueinander, so dass die Wechselmatrize (10) in der Halteöffnung (68) des Matrizenhalters (64) angeordnet ist, und
e. Einsetzen der Wechselmatrize (10) in die Halteöffnung (68) durch axiales Bewegen des Auswerfdorns (62) (S4).

15. Verfahren gemäß Patentanspruch 14 mit dem weiteren Schritt:
Bewegen eines Fixierdorns (66) oder einer Fixiervorrichtung (67) in Anlage mit einer Oberseite eines Matrizenkopfs (12) der Wechselmatrize (10), vorzugsweise bevor der Auswerfdorn (62) die Wechselmatrize (10) bewegt, und Halten der Wechselmatrize (10) zwischen Auswerfdorn (62) und Fixierdom (66) oder Fixiervorrichtung (67) beim Bewegen der Wechselmatrize (10) zur Halteöffnung (68) des Matrizenhalters (64).

16. Verfahren gemäß Patentanspruch 14 mit dem weiteren Schritt:
Bewegen des Auswerfdorns (62) in eine Durchgangsöffnung (39) gebildet aus mindestens einer Halteschale (38) in dem Verriegelungsabschnitt (36) des Matrizendoms (30) und
Entriegeln der Wechselmatrize (10) über ein Verschwenken der Halteschalen (38) durch den Auswerfdorn (62).

17. Verfahren zum Einsetzen einer Wechselmatrize (10) eines Fügegeräts (F), insbesondere ein Setzgerät, das einen Matrizendom (30) mit Durchgangsöffnung (32) aufweist, und das Verfahren ist **gekennzeichnet durch** die folgenden Schritte:
a. Anordnen einer Halteöffnung (68) eines Matrizenhalters (64) eines Matrizenwechslers gemäß einem der Patentansprüche 10 bis 12, die eine Wechselmatrize (10) enthält, oberhalb eines Auswerfdorns (62), der durch die Durchgangsöffnung (32) des Matrizendoms (30) bewegt worden ist (E1),
b. Lösen der Wechselmatrize (10) aus der Halteöffnung (68) durch eine Bewegung des Auswerfdorns (62) (E2),
c. Entfernen der Halteöffnung (68) von der gelösten Wechselmatrize (10) (E2) und
d. Bewegen des Auswerfdorns (62) durch die Durchgangsöffnung (32) des Matrizendoms (30), wobei sich die Wechselmatrize (10) in einem Verriegelungsabschnitt (36) des Matrizendoms (30) verriegelt (E4).

18. Verfahren gemäß Patentanspruch 19, wobei die Wechselmatrize (10) mithilfe eines Fixierdorns (66) oder einer Fixiervorrichtung (67) in den Verriegelungsabschnitt (36) mit einer Mehrzahl von Halteschalen (38) gedrückt wird.

19. Fügegerät (F), insbesondere ein Setzgerät, mit einem Matrizendom (30, 30') gemäß einem der Patentansprüche 5-9 und einer Wechselmatrize (10, 10') gemäß einem der Patentansprüche 1-4.

## Claims

1. Removable die (10) of a joining tool (6), in particular of a setting device, comprising a die head (12) having an upper side and a bottom side as well as a die shaft (14) extending perpendicularly from the bottom side of the die head (12) and being adapted to be receivable and lockable in a die dome (30) without rotation, wherein the die shaft (14) comprises:
a. at least one first radial web (16) forming an axial undercut with a side facing the die head (12) by means of which the die shaft (14) is solely lockable in the die dome (30) by means of a linear inserting movement,
b. at least one second radial web (24), the radial length of which is dadapted to a diameter of the die dome (30) to ensure a lateral guiding of the die shaft (14) in the die dome (30) and which is arranged between the die head (12) and the first radial web (16), and
c. an ejection surface (20) by means of which the removable die (10) can be moved out of the die dome (30) and which is arranged adjacent to the free end of the die shaft (14) opposite to the die head (12), **characterized in that**
d. the at least one first radial web (16) forms an axial undercut with a side facing away from the die head (12), and
e. the removable die (10) comprises a die shaft (14) axially extending beyond the first radial web (16).

2. Removable die (10) according to claim 1, comprising a die coding arranged on or at the die shaft (14) and being optically evaluable.

3. Removable die (10) according to claim 2, the die shaft (14) of which has a radial tapering section (22) having a smaller radial extension than the second radial web (24) and on which the die coding is arranged and/or the die shaft (14) of which comprises a third radial web (18) which constitutes the evaluable die coding by means of an axial length and at least one puncture (19).

4. Removable die (10) according to claim 1, the die head (12) of which comprises a radially tapered axial section (24) forming the second radial web (24), extending in the direction of the die shaft (14) and being adapted in its radial extension to the diameter of the die dome (30).

5. Die dome (30) of a joining device, in particular a setting device, in which a die shaft (14) of a removable die (10), in particular a removable die according to one of the claims 1 to 4, is receivable and lockable without rotation, and which comprises the following features:
a. a hollow cylindrical through-opening (32) for receiving and guiding the die shaft (14) comprising an axial guiding section (34) and an axial locking section (36) adjacent thereto, wherein
b. in the locking section (36), a form-fit acting and spring-pretensioned locking arrangement (38, 42) is provided and configured such that a die shaft (14) is automatically lockable therein by means of a rotation-free inserting of the die shaft (14) into the locking section (36) in an insertion direction, wherein
c. the locking arrangement (38, 42) is configured such that the die shaft (14) is automatically releasable from the locking arrangement (36) by means of an inserting of an ejection spike (62) into the through-opening (32) in an ejection direction opposite to the insertion direction and is removable from the die dome (30) so that
d. solely by an axial movement of the die shaft (14) within the die dome (30) and the ejection spike (62) within the die dome (30), the arranging, locking and removing of the removable die (10) can take place, **characterized in that**
e. the die dome (30) comprises a plurality of holding shells (38) in the locking section (36) which each comprise a tilting web (40) at a radially outer side so that an inner side of the holding shell (38) is pivotable around the tilting web (40).

6. Die dome (30) according to claim 5, the holding shells (38) of which are spring-pretensioned into an initial position axially spaced with respect to the tilting web (40) so that the holding shells (38) can automatically pivot back into the initial position after pivoting.

7. Die dome (30) according to claim 5 or 6, the locking section (36) of which comprises in the through-opening (32) a greater diameter as the guiding section (34) and the holding shells (38) are arranged in a form-fit manner in the locking section (36) by means of an insert element (46).

8. Die dome (30) according to claim 5 or 6, the plurality of holding shells (38), preferably two holding shells (38), of which define an at least two-stage through-opening (39) which has a greater diameter adjacent to the tilting web (40) than remote from the tilting web (40) and which comprises a radially inwardly protruding snap-in locking structure (44) remote from the tilting web (40), especially a snap-in locking web or a snap-in locking groove.

9. Die dome (30') of a joining device (F), in particular of a setting device, in which a die shaft (14') of a die (10'), which comprises a circumferential radial groove (15') for locking in the die dome, is receivable and lockable without rotation, wherein the die dome comprises the following features:
a. a hollow cylindrical through-opening (32') for receiving and guiding the die shaft (14') comprising an axial guiding section (34') and an axial locking section (36') adjacent thereto, **characterized in that**
b. in the locking section (36'), a form-fit acting locking arrangement with a rotatable locking element (33') is provided so that a die shaft (14') is lockable and unlockable therein by means of an inserting of the die shaft (14') into the locking section (36') in an insertion direction without rotation and by rotating the locking element (33') and which is removable from the locking arrangement (36') and from the die dome (30') by means of an inserting of an ejection spike (62) into the through-opening (32') in an ejection direction opposite to the insertion direction, in which
c. the locking element (33') is formed pin-like having a radial asymmetric tapering (35') and partly extends through the through-opening (32') so that the through-opening (32') is blockable or releasable by the tapering (35') by means of a rotation of the locking element (33') around a longitudinal axis of the locking element (33').

10. Die changer (60) for a removable die (10) of a joining device (F), in particular of a setting device, which is arrangeable in a die dome (30) of the joining device (F) comprising a through-opening (32), wherein the die changer (60) comprises the following features:
a. a die holder (64) having at least one holding opening (68) which is adapted to the removable die (10) such that a die shaft (14) is receivable in the holding opening (68) and a die head (12) can be supported at an edge of the holding opening (68), and the at least one holding opening (68) and the die shaft (14) are movable relative to each other, so that the removable die (10) is arrangeable within the holding opening (68), **characterized in that**
b. the holding opening (68) comprises a radial clearance (69) for radially inserting the die shaft (14) into the holding opening (68), and the die changer (60) further comprises:
c. an axially movably arranged ejection spike (62) which is adapted to the die dome (30) such that the ejection spike (62) is completely movable through the through-opening (32) of the die dome (30) for ejecting a removable die (10) from the die dome (30).

11. Die changer (60) according to claim 10, the die holder (64) of which comprises a rotatably arranged disc having a plurality of holding openings (68), the holding openings (68) of which are specifically movable adjacent to the die dome (30).

12. Die changer (60) according to claim 10 or 11, comprising an axially movably arranged fixing spike (66), which is movable coaxially with respect to the ejection spike, or a fixing device (67) which is adapted to engage at an upper side of the removable die (10) and to move in an adjusted manner with respect to the ejection spike (62).

13. System (S) for changing a removable die (10) of a joining device (F), in particular a setting device, comprising a joining device (F) having a die dome (30, 30') according to one of the claims 5 to 9 and a die changer (60) according to one of the claims 10 to 12, which is preferably adapted to remove a removable die (10, 10') according to one of the claims 1 to 4 from the die dome (30, 30') or to insert it therein.

14. Method for removing a removable die (10) from a joining device (F) which is fastened in a die dome (30) having a through opening (32), and the method is **characterized by** the following steps:
a. arranging the die dome (30) according to one of the claims 5 to 9, above an ejection spike (62) (S1),
b. moving the ejection spike (62) through the die dome (30), wherein the ejection spike (62) releases the removable die (10) from a locking section (36) of the die dome (30) (S2),
c. moving the removable die (10) with the ejection spike (62) beyond the die dome (30) in lateral alignment with a holding opening (68) of a die holder (64) of a die changer (60) according to claim 10 (S3),
d. relatively moving the die holder (64) and the removable die (10) with respect to each other so that the removable die (10) is arranged in the holding opening (68) of the die holder (64), and
e. inserting the removable die (10) in the holding opening (68) by axially moving the ejection spike (62) (S4).

15. Method according to claim 14, having the further step:
moving a fixing spike (66) or a fixing device (67) in abutment with an upper side of a die head (12) of the removable die (10), preferably before the ejection spike (62) moves the removable die (10), and
holding the removable die (10) between ejection spike (62) and fixing spike (66) or fixing device (67) while moving the removable die (10) towards the holding opening (68) of the die holder (64).

16. Method according to claim 14, comprising the further step:
moving the ejection spike (62) into a through opening (39) formed of at least one holding shell (38) in the locking section (36) of the die dome (30) and
unlocking the removable die (10) by means of a pivoting of the holding shells (38) by means of the ejection spike (62).

17. Method for inserting a removable die (10) of a joining device (F), in particular a setting device, comprising a die dome (30) having a through-opening (32), and the method is **characterized by** the following steps:
a. arranging a holding opening (68) of a die holder (64) of a die changer according to one of the claims 10 to 12, the holding opening (68) containing a removable die (10), above an ejection spike (62) which has been moved through the through-opening (32) of the die dome (30) (E1),
b. releasing the removable die (10) from the holding opening (68) by means of a moving of the ejection spike (62) (E2),
c. removing the holding opening (68) from the released removable die (10) (E2), and
d. moving the ejection spike (62) through the through-opening (32) of the die dome (30), wherein the removable die (10) locks in a locking section (36) of the die dome (30) (E4).

18. Method according to claim 19, wherein the removable die (10) is pushed by means of a fixing spike (66) or a fixing device (67) into the locking section (36) having a plurality of holding shells (38).

19. Joining device (F), in particular a setting device, having a die dome (30, 30') according to one of the claims 5-9 and a removable die (10, 10') according to one of the claims 1-4.

## Revendications

1. Matrice interchangeable (10) d'un outil d'assemblage (6), notamment d'un appareil de pose, qui présente une tête de matrice (12) avec une partie supérieure et une partie inférieure ainsi qu'une tige de matrice (14), qui s'étend verticalement de la partie inférieure de la tête de matrice (12) et est adaptée pour pouvoir être logée et verrouillée dans un dôme de matrice (30) sans aucune rotation, dans laquelle la tige de matrice (14) comprend :
a) au moins une première nervure radiale (16), qui forme une contre-dépouille axiale avec une face tournée vers la tête de matrice (12), par le biais de laquelle la tige de matrice (14) est verrouillable dans le dôme de matrice (30) rien que par un mouvement d'insertion rectiligne,
b) au moins une deuxième nervure radiale (24), dont la longueur radiale est adaptée à un diamètre du dôme de matrice (30) pour assurer un guidage latéral de la tige de matrice (14) dans le dôme de matrice (30), et qui est disposée entre la tête de matrice (12) et la première nervure radiale (16), et
c) une surface d'éjection (20), qui permet de pousser la matrice interchangeable (10) hors du dôme de matrice (30) et qui est disposée en vis-à-vis de la tête de matrice (12) de façon adjacente à l'extrémité libre de la tige de matrice (14), **caractérisée en ce que**
d) ladite première nervure radiale (16) forme une contre-dépouille axiale avec une face opposée à la tête de matrice (12) et
e) la matrice interchangeable (10) présente une tige de matrice (14) s'étendant axialement au-delà de la première nervure radiale (16).

2. Matrice interchangeable (10) selon la revendication 1, qui présente un codage de matrice, qui est disposé sur la tige de matrice (14) ou au bord de celle-ci et est exploitable par voie optique.

3. Matrice interchangeable (10) selon la revendication 2, dont la tige de matrice (14) présente un tronçon rétréci radial (22) avec une extension radiale plus faible que la deuxième nervure radiale (24), sur laquelle le codage de matrice est disposé et / ou dont la tige de matrice (14) comprend une troisième nervure radiale (18), qui expose le codage de matrice détectable sur toute une longueur axiale et au moins une encoche (19).

4. Matrice interchangeable (10) selon la revendication 1, dont la tête de matrice (12) présente un tronçon axial (24) rétréci radialement, qui forme la deuxième nervure radiale (24), qui s'étend en direction de la tige de matrice (14) et qui est adapté au diamètre du dôme de matrice (30) dans une extension radiale.

5. Dôme de matrice (30) d'un appareil d'assemblage, notamment d'un appareil de pose, dans lequel une tige (14) d'une matrice interchangeable (10) selon l'une des revendications 1 à 4 peut être logée et verrouillée sans aucune rotation, et qui présente les caractéristiques suivantes :
a) une ouverture de passage cylindrique creuse (32), destinée à recevoir et à guider la tige de matrice (14), qui comprend un tronçon de guidage axial (34) et un tronçon de verrouillage axial (36) y étant adjacent, dans lequel
b) un ensemble de verrouillage (38, 42) sollicité par un ressort et agissant par complémentarité de forme est prévu à l'intérieur du tronçon de verrouillage axial (36) et est configuré de sorte qu'une tige de matrice (14) y est verrouillable automatiquement par insertion de la tige de matrice (14) sans aucune rotation dans un sens de pose à l'intérieur du tronçon de verrouillage axial (36), dans lequel
c) l'ensemble de verrouillage (38, 42) est configuré de sorte que la tige de matrice (14) peut être détachée automatiquement de l'ensemble de verrouillage (38, 42) par introduction d'un mandrin d'éjection (62) à l'intérieur de l'ouverture de passage (32) dans un sens d'éjection opposé au sens de pose et peut être retirée du dôme de matrice (30), si bien que
d) la mise en place, le verrouillage et le retrait de la matrice interchangeable (10) peuvent s'opérer rien que par un mouvement axial de la tige de matrice (14) à l'intérieur du dôme de matrice (30) et du mandrin d'éjection (62) à l'intérieur du dôme de matrice (30), **caractérisé en ce que**
e) le dôme de matrice (30) présente de multiples coquilles de maintien (38) à l'intérieur du tronçon de verrouillage (36), qui comprennent respectivement une nervure de basculement (40) sur une face extérieure radiale, si bien qu'une face intérieure de la coquille de maintien (38) peut pivoter autour de la nervure de basculement (40).

6. Dôme de matrice (30) selon la revendication 5, dont les coquilles de maintien (38) espacées axialement par rapport à la nervure de basculement (40) sont sollicitées par un ressort dans une position initiale, si bien que les coquilles de maintien (38) peuvent revenir automatiquement dans la position initiale après un pivotement.

7. Dôme de matrice (30) selon la revendication 5 ou 6, dont le tronçon de verrouillage (36) présente un plus grand diamètre que le tronçon de guidage (34) dans l'ouverture de passage (32) et les coquilles de maintien (38) sont disposées par complémentarité de forme à l'aide d'un élément d'insert (46) dans le tronçon de verrouillage (36).

8. Dôme de matrice (30) selon la revendication 5 ou 6, dont les multiples coquilles de maintien (38), de préférence deux coquilles de maintien (38), définissent une ouverture de passage (39) à deux étages, qui présente une plus grand diamètre à proximité de la nervure de basculement (40) qu'à distance de la nervure de basculement (40) et qui comprend une structure d'encliquetage (44) pointant radialement vers l'intérieur à distance de la nervure de basculement (40), notamment une nervure d'encliquetage ou une rainure d'encliquetage.

9. Dôme de matrice (30') d'un appareil d'assemblage (F), notamment d'un appareil de pose, dans lequel une tige (14') d'une matrice (10'), qui présente une rainure radiale périphérique (15') destinée au verrouillage à l'intérieur du dôme de matrice (30'), peut être logée et verrouillée sans aucune rotation, et qui présente les caractéristiques suivantes :
a) une ouverture de passage cylindrique creuse (32'), destinée à recevoir et à guider la tige de matrice (14'), qui comprend un tronçon de guidage axial (34') et un tronçon de verrouillage axial (36') y étant adjacent, **caractérisé en ce que**
b) un ensemble de verrouillage agissant par complémentarité de forme à l'intérieur du tronçon de verrouillage (36') est prévu avec un élément de verrouillage pivotant (33'), si bien qu'une tige de matrice (14') y est verrouillable et y est déverrouillable par insertion de la tige de matrice (14') sans aucune rotation dans un sens de pose à l'intérieur du tronçon de verrouillage axial (36') et par rotation de l'élément de verrouillage (33'), et peut être retiré de l'ensemble de verrouillage (36') et du dôme de matrice (30') par introduction d'un mandrin d'éjection (62) à l'intérieur de l'ouverture de passage (32') dans un sens d'éjection opposé au sens de pose, à l'intérieur duquel
c) l'élément de verrouillage (33') est formé sous la forme d'une tige avec un rétrécissement asymétrique radial (35') et traverse en partie l'ouverture de passage (32'), si bien que l'ouverture de passage (32') peut être bloquée ou débloquée par le rétrécissement (35') lors d'une rotation de l'élément de verrouillage (33') autour d'un axe longitudinal de l'élément de verrouillage (33').

10. Changeur de matrice (60) d'une matrice interchangeable (10) d'un appareil d'assemblage (F), notamment d'un appareil de pose, qui peut être disposé dans un dôme de matrice (30) de l'appareil d'assemblage (F), qui présente une ouverture de passage (32), dans lequel le changeur de matrice (60) comprend les caractéristiques suivantes :
a) un porte-matrice (64) avec au moins une ouverture de maintien (68), qui est adaptée à la matrice interchangeable (10), de sorte qu'une tige de matrice (14) peut être logée dans l'ouverture de maintien (68) et une tête de matrice (12) peut prendre appui sur un bord de l'ouverture de maintien (68) et que ladite ouverture de maintien (68) au moins et la tige de matrice (14) peuvent être déplacées l'une par rapport à l'autre, si bien que la matrice interchangeable (10) peut être disposée à l'intérieur de l'ouverture de maintien (68), **caractérisé en ce que**
b) l'ouverture de maintien (68) présente un dégagement radial (69) destiné à l'insertion radiale de la tige de matrice (14) dans l'ouverture de maintien (68), et que le changeur de matrice (60) comprend encore :
c) un mandrin d'éjection (62) disposé axialement de façon à pouvoir être poussé, qui est adapté au dôme de matrice (30), de sorte que le mandrin d'éjection (62) est complètement déplaçable à travers l'ouverture de passage (32) du dôme de matrice (30) pour éjecter une matrice interchangeable (10) hors du dôme de matrice (30).

11. Changeur de matrice (60) selon la revendication 10, dont le porte-matrice (64) comprend un disque disposé de façon rotative avec de multiples ouvertures de maintien (68), dont les ouvertures de maintien (68) sont déplaçables de manière ciblée à proximité du dôme de matrice (30).

12. Changeur de matrice (60) selon la revendication 10 ou 11, qui comprend un mandrin de fixation (66) disposé de façon mobile axialement en coaxialité par rapport au mandrin d'éjection ou un dispositif de fixation (67), qui l'un comme l'autre est adapté pour agir sur une partie supérieure de la matrice interchangeable (10) et se déplacer en s'adaptant au mandrin d'éjection (62).

13. Système (S) de changement d'une matrice interchangeable (10) sur un appareil d'assemblage (F), notamment un appareil de pose, qui comprend un appareil d'assemblage (F) avec un dôme de matrice (30, 30') selon l'une des revendications 5-9 et un changeur de matrice (60) selon l'une des revendications 10-12, qui sont adaptés de préférence pour retirer une matrice interchangeable (10, 10') selon l'une des revendications 1-4 hors du dôme de matrice (30, 30') ou l'y insérer.

14. Procédé de retrait d'une matrice interchangeable (10) d'un appareil d'assemblage (F), qui est fixé dans un dôme de matrice (30) avec une ouverture de passage (32), et le procédé est **caractérisé par** les étapes suivantes :
a) la disposition du dôme de matrice (30) selon l'une des revendications 5 à 9 au-dessus d'un mandrin d'éjection (62) (S1),
b) le déplacement du mandrin d'éjection (62) à travers le dôme de matrice (30), dans lequel le mandrin d'éjection (62) détache la matrice interchangeable (10) d'un tronçon de verrouillage (36) du dôme de matrice (30) (S2),
c) le déplacement de la matrice interchangeable (10) avec le mandrin d'éjection (62) au-delà du dôme de matrice (30) dans un alignement latéral avec une ouverture de maintien (68) d'un porte-matrice (64) d'un changeur de matrice (60) selon la revendication 10 (S3),
d) le déplacement relatif du porte-matrice (64) et de la matrice interchangeable (10) l'un par rapport à l'autre, si bien que la matrice interchangeable (10) est disposée dans l'ouverture de maintien (68) du porte-matrice (64), et
e) l'insertion de la matrice interchangeable (10) dans l'ouverture de maintien (68) par le déplacement axial du mandrin d'éjection (62) (S4).

15. Procédé selon la revendication 14 avec l'autre étape suivante :
le déplacement d'un mandrin de fixation (66) ou d'un dispositif de fixation (67) en appui contre une partie supérieure d'une tête de matrice (12) de la matrice interchangeable (10), de préférence avant que le mandrin d'éjection (62) déplace la matrice interchangeable (10), et le maintien de la matrice interchangeable (10) entre le mandrin d'éjection (62) et le mandrin de fixation (66) ou le dispositif de fixation (67) lors du déplacement de la matrice interchangeable (10) vers l'ouverture de maintien (68) du porte-matrice (64).

16. Procédé selon la revendication 14 avec l'autre étape suivante :
le déplacement d'un mandrin d'éjection (62) dans une ouverture de passage (39) formée d'au moins une coquille de maintien (38) dans le tronçon de verrouillage (36) du dôme de matrice (30) et
le déverrouillage de la matrice interchangeable (10) par un pivotement des coquilles de maintien (38) au moyen du mandrin d'éjection (62).

17. Procédé d'insertion d'une matrice interchangeable (10) d'un appareil d'assemblage (F), notamment d'un appareil de pose, qui présente un dôme de matrice (30) avec une ouverture de passage (32), et le procédé est **caractérisé par** les étapes suivantes :
a) la disposition d'une ouverture de maintien (68) d'un porte-matrice (64) d'un changeur de matrice selon l'une des revendications 10 à 12, qui contient une matrice interchangeable (10), au-dessus d'un mandrin d'éjection (62) qui a été déplacé à travers l'ouverture de passage (32) du dôme de matrice (30) (E1),
b) le détachement de la matrice interchangeable (10) de l'ouverture de maintien (68) par un mouvement du mandrin d'éjection (62) (E2),
c) le retrait de la matrice interchangeable (10) détachée hors de l'ouverture de maintien (68) (E2) et
d) le déplacement du mandrin d'éjection (62) à travers l'ouverture de passage (32) du dôme de matrice (30), dans lequel la matrice interchangeable (10) se verrouille dans un tronçon de verrouillage (36) du dôme de matrice (30) (E4).

18. Procédé selon la revendication 19, dans lequel la matrice interchangeable (10) est serrée dans le tronçon de verrouillage (36) avec de multiples coquilles de maintien (38) à l'aide d'un mandrin de fixation (66) ou d'un dispositif de fixation (67).

19. Appareil d'assemblage (F), notamment un appareil de pose, avec un dôme de matrice (30, 30') selon l'une des revendications 5-9 et une matrice interchangeable (10, 10') selon l'une des revendications 1-4.
